# EUROPEAN PATENT APPLICATION

(11) **EP 1 492 265 A1**
(43) Date of publication of application: **29.12.2004**
(21) Application number: 03707167.7
(22) Date of filing: 28.02.2003
(51) Int. Cl.: H04L 9/08, G11B 20/10, G06F 12/14, H04M 11/00

(54) **CONTENT PROCESSING DEVICE, CONTENT ACCUMULATION MEDIUM, CONTENT PROCESSING METHOD, AND CONTENT PROCESSING PROGRAM**

(30) Priority: 29.03.2002 JP 2002097429
(71) Applicant: MATSUSHITA ELECTRIC INDUSTRIAL CO., LTD., Kadoma-shi, Osaka 571-8501 (JP)
(72) Inventor: NAKAI, Shinichi, Yokohama-shi, Kanagawa 226-0024 (JP); NOGUCHI, Naohiko, Yokohama-shi, Kanagawa 222-0031 (JP); MATSUI, Shinichi, Kobe-shi, Hyogo 658-0073 (JP); NANBA, Takaaki, Nissin-shi, Aichi 470-0114 (JP); INOUE, Ryuji, Minoo-shi, Osaka 562-0005 (JP)
(74) Representative: Grünecker, Kinkeldey, Stockmair & Schwanhäusser Anwaltssozietät
(86) International application number: PCT/JP2003/002291
(87) International publication number: WO 2003/084125

(57) **Abstract**

With respect to encrypted content 104 stored in content storage medium 102, by storing information with a small data amount related to the encrypted content 104 in content storage medium 102 in association with the encrypted content 104, it is possible to distinguish between encrypted content 104 based on the related information without decoding the encrypted content 104 with a large data amount. It is thereby possible to more readily distinguish between a plurality of pieces of content stored in the content storage medium.

## Description

### Technical Field

The present invention relates to a content processing apparatus, content storage medium, content processing method and content processing program to store content in the content storage medium to use.

### Background Art

Conventionally, there are terminal apparatuses such as cellular telephones that download various kinds of content from content providers to use in the terminal apparatuses.

A terminal apparatus allowed to download content stores the downloaded content in a detachable content storage medium such as a memory card, and thereby is capable of providing a plurality of pieces of content to its user without increasing the capacity of the internal memory. It is thus possible to avoid increases in size of the terminal apparatus and ensure portability.

In the case of storing the content in the content storage medium, the terminal apparatus encrypts the content by a predetermined encryption method to store. It is thereby limited using the content stored in the content storage medium in another use environment.

Further, the content storage medium allows not only a single terminal apparatus but also a plurality of terminal apparatuses to store encrypted content therein. It is thus possible for a user to store in a single memory card pieces of content that are downloaded in a plurality of terminal apparatuses in possession of the user. Thus, cases occur where pieces of content stored by a plurality of different terminal apparatuses coexist in a single content storage medium.

Content has a different target terminal apparatus capable of using the content corresponding to the type and structure of the terminal apparatus.

Accordingly, when a content storage medium is inserted into a terminal apparatus and content is read from the content storage medium, the terminal apparatus reads out the content one by one from the inserted content storage medium, decodes each content completely, and then, is first allowed to judge whether or not the content is available.

In this way, in the conventional terminal apparatuses, as the operation for finding content available in a terminal apparatus used at the moment from among a plurality of pieces of content stored in the content storage medium, complicated operation is required such that each content is read from the inserted content storage medium and judgment on whether the content is available or not is made after decoding the read content sequentially, and there arises a problem that the time required for the operation increases.

Further, in the conventional terminal apparatuses, there are models that are difficult to judge whether or not content stored in the content storage medium is available. In such a case, for example, assuming that audio data is stored as the content in the content storage medium, there is a possibility that even when the audio data is not authorized data for a terminal apparatus, the terminal apparatus plays back the data, resulting in a problem that inconvenience occurs such that a high-level sound flows out.

### Disclosure of Invention

It is an object of the present invention to provide a content processing apparatus, content storage medium, content processing method and content processing program enabling a plurality of pieces of content stored in the content storage medium to be distinguished readily from one another.

The object is achieved by associating information with a small data amount related to encrypted content stored in a content storage medium with the encrypted content to store in the content storage medium, and thereby distinguishing between encrypted content based on the related information without decoding the encrypted content with a large data amount.

### Brief Description of Drawings

FIG. 1 is an appearance view of a content processing apparatus according to Embodiment 1 of the present invention;
FIG.2 is a block diagram illustrating a configuration of the content processing apparatus according to Embodiment 1;
FIG.3 is a flowchart illustrating procedures of content write-out processing in the content processing apparatus according to Embodiment 1;
FIG.4 is a schematic chart illustrating data stored in a content storage medium according to Embodiment 1 of the present invention;
FIG.5 is a flowchart illustrating procedures of content read-in processing in the content processing apparatus according to Embodiment 1 of the present invention;
FIG.6 is a block diagram illustrating a configuration of a content processing apparatus according to Embodiment 2;
FIG.7 is a flowchart illustrating procedures of content write-out processing in the content processing apparatus according to Embodiment 2;
FIG.8 is a schematic chart illustrating data stored in a content storage medium according to Embodiment 2 of the present invention;
FIG.9 is a flowchart illustrating procedures of content read-in processing in the content processing apparatus according to Embodiment 2 of the present invention;
FIG.10 is a block diagram illustrating a configuration of a content processing apparatus according to Embodiment 3;
FIG.11 is a flowchart illustrating procedures of content write-out processing in the content processing apparatus according to Embodiment 3;
FIG.12 is a schematic chart illustrating data stored in a content storage medium according to Embodiment 3 of the present invention;
FIG.13 is a flowchart illustrating procedures of content read-in processing in the content processing apparatus according to Embodiment 3 of the present invention;
FIG.14 is a block diagram illustrating a configuration of a content processing apparatus according to Embodiment 4;
FIG.15 is a flowchart illustrating procedures of content write-out processing in the content processing apparatus according to Embodiment 4;
FIG.16 is a schematic chart illustrating data stored in a content storage medium according to Embodiment 4 of the present invention;
FIG.17 is a flowchart illustrating procedures of content read-in processing in the content processing apparatus according to Embodiment 4 of the present invention;
FIG.18 is a block diagram illustrating a configuration of a content processing apparatus according to Embodiment 5;
FIG.19 is a flowchart illustrating procedures of content write-out processing in the content processing apparatus according to Embodiment 5;
FIG. 20 is a schematic chart illustrating data stored in a content storage medium according to Embodiment 5 of the present invention;
FIG.21 is a flowchart illustrating procedures of content read-in processing in the content processing apparatus according to Embodiment 5 of the present invention;
FIG.22 is a block diagram illustrating a configuration of a content processing apparatus according to Embodiment 6;
FIG.23 is a flowchart illustrating procedures of content write-out processing in the content processing apparatus according to Embodiment 6;
FIG. 24 is a schematic chart illustrating data stored in a content storage medium according to Embodiment 6 of the present invention;
FIG.25 is a flowchart illustrating procedures of content read-in processing in the content processing apparatus according to Embodiment 6 of the present invention;
FIG.26 is a block diagram illustrating a configurationofacontentprocessingapparatusaccording to Embodiment 7;
FIG.27 is a flowchart illustrating procedures of content write-out processing in the content processing apparatus according to Embodiment 7;
FIG. 28 is a schematic chart illustrating data stored in a content storage medium according to Embodiment 7 of the present invention; and
FIG.29 is a flowchart illustrating procedures of content read-in processing in the content processing apparatus according to Embodiment 7 of the present invention.

### Best Mode for Carrying Out the Invention

Embodiments of the present invention will be specifically described below with reference to accompanying drawings.

### (Embodiment 1)

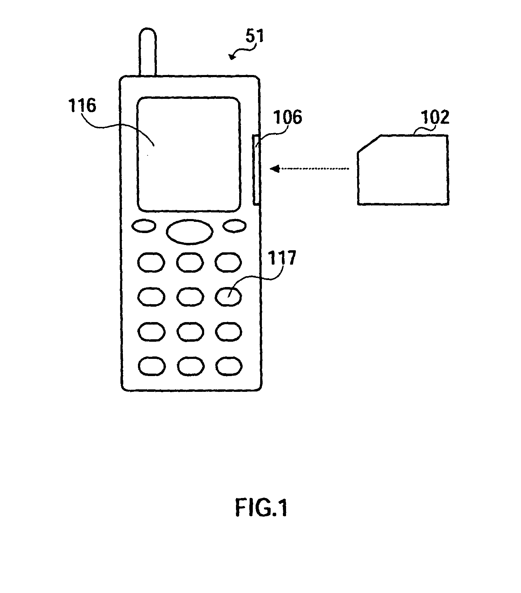

FIG.1 is a front view showing an appearance of cellular phone 101 as a content processing apparatus according to Embodiment 1 of the present invention.

Cellular phone 101 has a cellular phone function section for communicating with other telephone apparatuses via cellular phone networks, and downloads various kinds of content such as music and games from a content provider via the cellular phone networks.

Cellular phone 101 further has memory card interface (I/F) 106 enabling a card-shaped recordingmedium (memory card 102) that is a content storage medium to be detachable, and writes (hereinafter referred to as information write) various information such as content stored in internal memory of cellular phone 101 in memory card 102 inserted into memory card interface 106, while reading (hereinafter referred to as information read) various information such as content stored in memory card 102.

Input interface (I/F) 117 comprised of operation buttons is provided in the front portion of the housing of cellular phone 101. By operating input interface 117, a user is able to input telephone numbers when using the cellular phone function, and, in addition, input various commands such as for content download, write and read of various information in/from memory card 102, and so on.

Further, liquid crystal screen 116 of a liquid crystal display section is provided at the front portion of the housing of cellular phone 101, and displays information on the operation of cellular phone 101, various kinds of information on execution of content and information of the content.

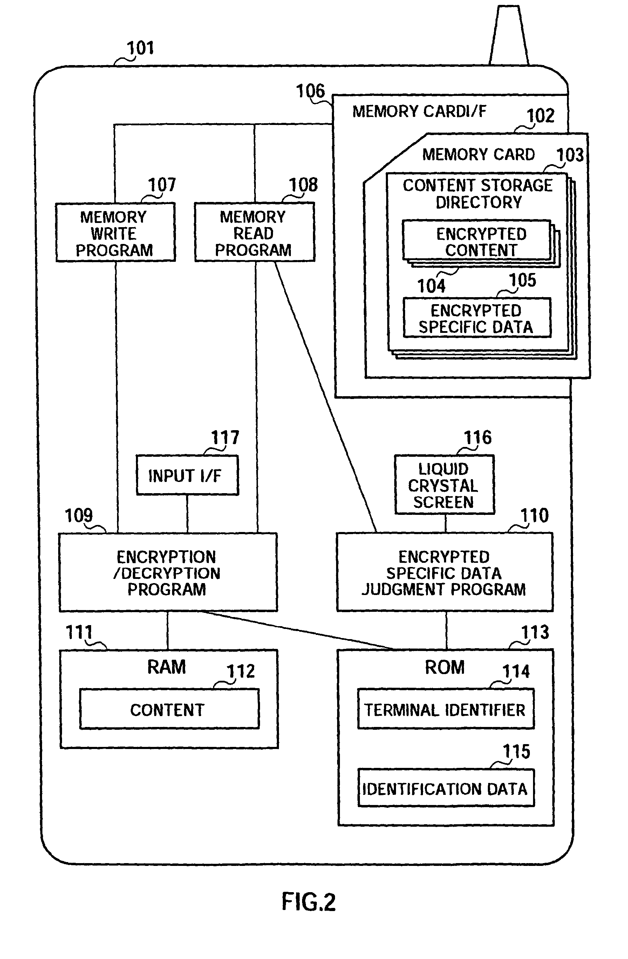

FIG.2 is a block diagram illustrating a configuration of cellular phone 101 with the same reference numerals assigned to the same sections as in FIG.1. FIG.2 particularly shows a structure concerning content processing among the configuration of cellular phone 101. Cellular phone 101 includes memory write program 107, memory read program 108, encryption/decryption program 109 and encrypted identification data judgment program 110, each operated by a CPU (Central Processing Unit) not shown.

In FIG.2, cellular phone 101 stores content 112 downloaded from a content provider via cellular phone networks in RAM (Random Access Memory) 111. Encryption/decryption program 109 is to encrypt content 112 stored in RAM 111. Content 112 encrypted by encryption/decryption program 109 is written in memory card 102 as encrypted content 104 by memory write program 107 via memory card interface 106.

ROM (Read Only Memory) 113 stores terminal identifier 114 comprised of, for example, a telephone number unique to cellular phone 101, and identification data 115 comprised of, for example, a character sequence common to systems for writing or reading content in/from the memory card as described in this Embodiment.

Encryption/decryption program 109 encrypts content 112 using terminal identifier 114 stored in ROM (Read Only Memory) 113. Further, when encrypting content 112 to store in memory card 102, encryption/decryption program 109 encrypts identification data 115 stored in ROM 113 using terminal identifier 114. Memory write program 107 stores encrypted identification data 105 that is a result of the encryption in the same directory as that of encrypted content 104 in memory card 102. Thus, encrypted identification data 105 is stored in the same directory as that of encrypted content 104, whereby encrypted identification data 105 and encrypted content 104 is stored in memory card 102 in association with each other.

When encrypted content 104 stored in memory card 102 is read into cellular phone 101, memory read program 108 of cellular phone 101 reads encrypted identification data 105, which is stored in the same directory as that of encryption content 104, from memory card 102 via memory card interface 106, prior to the processing for reading encrypted content 104.

Read encrypted identification data 105 is decoded by encrypted identification data judgment program 110. In this case, encrypted identification data judgment program 110 decodes the encrypted identification data using terminal identifier 114 unique to cellular phone 101 stored in ROM 113, compares the decoded identification data with identification data 115 stored in ROM 113, and when the comparison result indicates agreement, is capable of judging that the decoded encrypted identification data 105 in memory card 102 is data that is written in memory card 102 by cellular phone 101.

Thus, when it is recognized that encrypted identification data 105 stored in memory card 102 is data that is written in memory card 102 by cellular phone 101, encryption/decryption program 109 decodes encrypted content 104 stored in the same directory as that of the encrypted identification data 105, and stores the decoded content 112 in RAM 111.

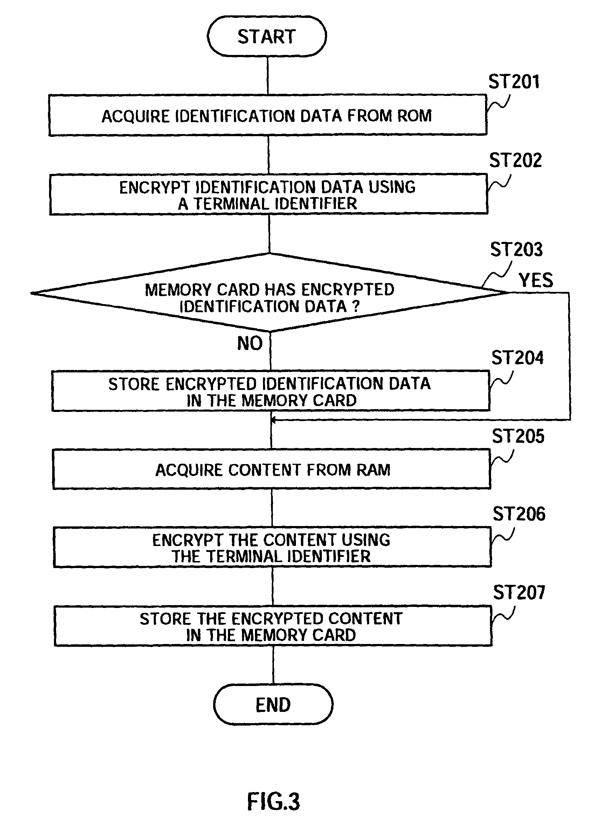

FIG.3 is a flowchart illustrating processing procedures of encryption/decryption program 109 in storing in memory card 102 content 112 stored in RAM 111 of cellular phone 101.

As shown in FIG.3, encryption/decryption program 109 acquires identification data 115 and terminal identifier 114 from ROM 113 in step ST201. Then, encryption/decryption program 109 shifts to step ST202, encrypts identification data 115 acquired in step ST201, for example, in the triple DES (Data encryption Standard) encryption scheme, using terminal identifier 114 unique to cellular phone 101 acquired in step ST201, and thereby generates encrypted identification data 105.

Encryption/decryption program 109 shifts to step ST203, and judges whether or not the same encrypted identification data as the encrypted identification data 105 generated in step ST202 is already stored in memory card 102 inserted into memory card interface 106. The negative result obtained in this step means that memory card 102 does not store encrypted identification data 105 encrypted using terminal identifier 114 unique to cellular phone 101 i.e. encrypted identification data 105 written by cellular phone 101. At this point, encryption/decryption program 109 shifts to step ST204, stores encrypted identification data 105 encrypted in step ST202 in memory card 102 using memory write program 107, and shifts to step ST205.

Meanwhile, the positive result obtained in step ST203 means that memory card 102 stores encrypted identification data 105 written by cellular phone 101, and at this point, encryption/decryption program 109 shifts to step ST205.

After acquiring content 112 from RAM 111 in step ST205, encryption /decryption program 109 shifts to step ST206, and encrypts content 112 acquired in step ST205, for example, in the triple DES encryption scheme, using terminal identifier 114 in ROM 113.

Then, encryption /decryption program 109 shifts to step ST207, and stores encrypted content 104 encrypted in step ST206 in the same directory as that of encrypted identification data 105 stored in memory card 102 in step ST204.

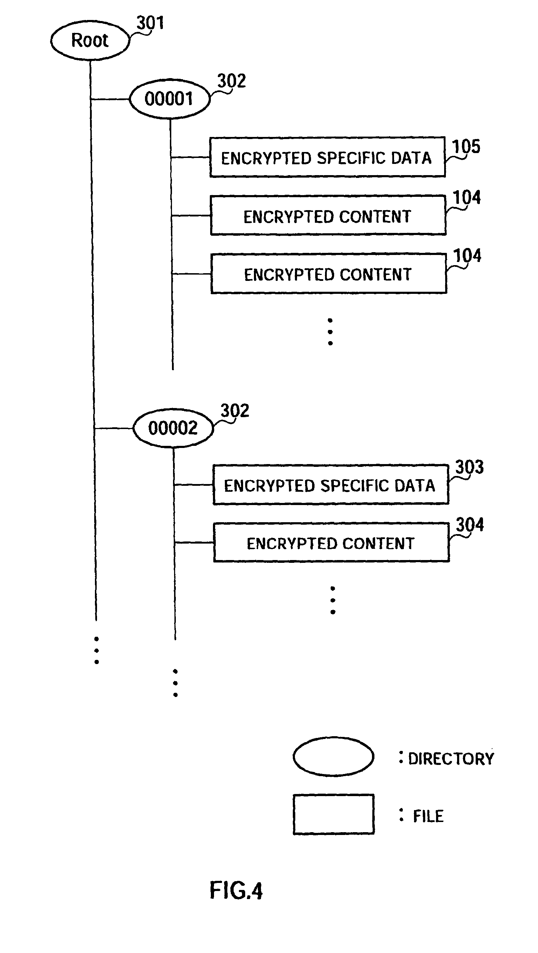

In this way, as shown in FIG.4, in memory card 102, content 112 (encrypted content 104) and identification data 115 (encrypted identification data 105) both encrypted using the same terminal identifier 114 is stored in the same directories 301 and 302. Thus, by storing encrypted content 104 and encrypted identification data 105 in the same directory, the data is stored in memory card 102 in association with one another.

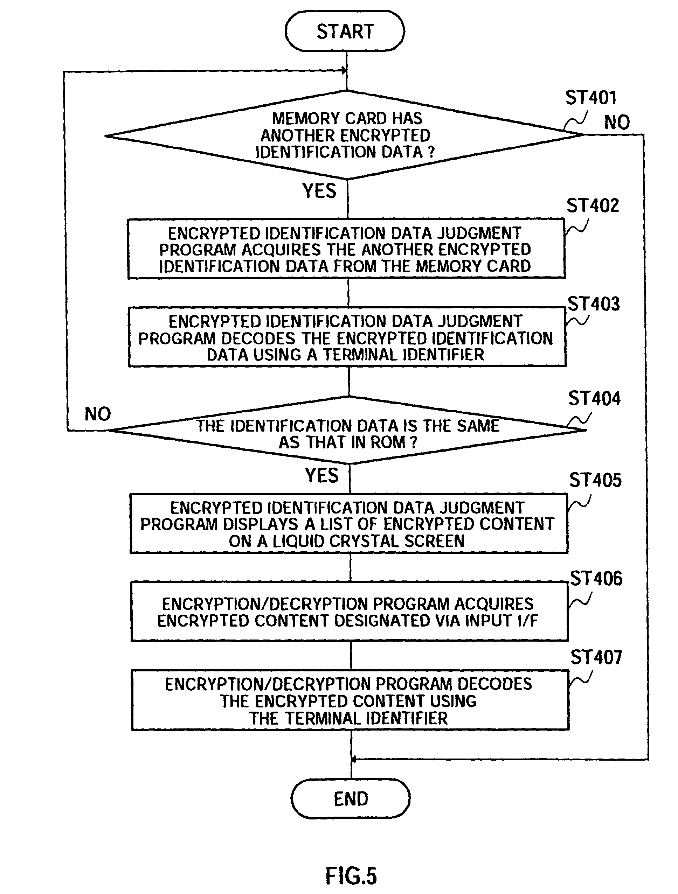

FIG.5 is a flowchart illustrating processing procedures of encryption/decryption program 109 and encrypted identification data judgment program 110 when cellular phone 101 reads and decodes encrypted content 104 and encrypted identification data stored in memory card 102 in the processing procedures in FIG.3.

As shown in FIG.5, in step ST401, encrypted identification data judgment program 110 checks whether encrypted identification data 105 is present in memory card 102. The negative result obtained in this step means that memory card 102 does not have encrypted identification data 105 to read i.e. encrypted content 104 associated with the encrypted identification data 105. In this case, encrypted identification data judgment program 110 finishes the processing procedures.

In contrast thereto, the positive result obtained in step ST401 means that memory card 102 has encrypted identification data 105 to read i.e. encrypted content 104 associated with the encrypted identification data 105. In this case, encrypted identification data judgment program 110 shifts to step ST402, acquires the encrypted identification data 105 from memory card 102 using memory read program 108, and shifts to step ST403. In step ST403, encrypted identification data judgment program 110 decodes the encrypted identification data 105 acquired in step ST402 using terminal identifier 114 stored in ROM 113.

Then, encrypted identification data judgment program 110 shifts to step ST404, compares the identification data decoded in step ST403 with identification data 115 stored in ROM 113, and judges whether the decoded identification data is the same as identification data 115 stored in ROM 113.

When cellular phone 101 encrypts content 112 and writes in memory card 102, encrypted identification data 105 obtained by encrypting identification data 115 using terminal identifier 114 is always stored in association with encrypted content 104. Accordingly, when the identification data decoded in step ST403 is in agreement with identification data 115 stored in ROM 113 as a result of comparison, it is meant that the decoded encrypted identification data 105 is written in memory card 102 by cellular phone 101, in other words, encrypted content 104 stored in memory card 102 in association with the encrypted identification data 105 is written in memory card 102 by cellular phone 101.

Accordingly, when the identification data decoded in step ST403 is in agreement with identification data 115 stored in ROM 113 as a result of comparison, encrypted identification data judgment program 110 notifies the result of agreement to encryption/decryption program 109, and shifts from step ST404 to step ST405.

In contrast thereto, when the identification data decoded in step ST403 is not in agreement with identification data 115 stored in ROM 113 as a result of comparison, encrypted identification data judgment program 110 notifies the result of disagreement to encryption/decryption program 109, returns to step ST401, judges whether or not memory card 102 has another encrypted identification data, and when another encrypted identification data exists, executes the same processing on the encrypted identification data.

In step ST405, encrypted identification data judgment program 110 instructs encryption/decryption program 109 to decode the encrypted identification data 105 with the result of agreement in step ST404, and all items of encrypted identification data stored in directory 302 storing the encrypted identification data 105, and displays a list of the data on liquid crystal screen 116.

By this means, liquid crystal screen 106 displays the list of identification data 115 associated with encrypted content 104 available in cellular phone 101 among encrypted content stored in memory card 102. In other words, the encrypted content 104 available in cellular phone 101 is displayed in list form using identification data 115 which is associated with the content 104 and has a small data amount.

In addition, this Embodiment describes the case of decoding encrypted identification data 105 associated with encrypted content 104 to display in list form. However, the present invention is not limited to such a case, and it may be possible to store only a title of content corresponding to identification data 115 in RAM 111 of cellular phone 101 when encrypted content 104 is stored in memory card 102 in association with the identification data 115, and display in list form the stored title based on a result on whether the identification data 105 is in agreement in step ST404.

When the list of content is displayed on liquid crystal screen 116 in step ST405, a user operates input interface 117, and thereby selects desired content from the displayed list.

By this means, encryption/decryption program 109 shifts to step ST406, and, using memory read program 108, reads encrypted content 104 designated through input interface 117 from memory card 102, shifts to a subsequent step, ST407, and using terminal identifier 114 stored in ROM 113, decodes the encrypted content 104 acquired from memory card 102 in step ST406 to store in RAM 111.

Content 111 stored in RAM 111 is initiated by a user of cellular phone 101 operating input interface 117, and used for the user.

In the aforementioned constitution, when writing encrypted content 104 in memory card 102, cellular phone 101 stores encrypted identification data 105 associated with the encrypted content 104 in memory card 102.

The encrypted identification data 105 is, for example, obtained by encrypting some character sequence, and thus has a data amount extremely smaller than that of encrypted content 104. Accordingly, before reading encrypted content 104 from memory card 102 to decode, cellular phone 101 reads encrypted identification data 105 associated with the encrypted content 104 to decode, and determines whether or not the decoded identification data is written in memory card 102 by cellular phone 101.

When the decoded identification data is data written inmemory card 102 by cellular phone 101, encrypted content 104 stored in memory card 102 in association with the identification data is also data written in memory card 102 by cellular phone 101.

Accordingly, in this case, encrypted content 104 stored in memory card 102 can be read into cellular phone 101 to be used therein, and encryption/decryption program 109 reads encrypted content 104 from memory card 102, and decodes the read encrypted content 104.

In this way, on the condition that a result of decoding of encrypted identification data 105 is in agreement with identification data 115 stored in ROM 113, cellular phone 101 reads encrypted content 104 associated with the encrypted identification data 105 from memory card 102, and thus is capable of selecting and decoding only encrypted content 104 available in cellular phone 101.

Accordingly, when a pluralityof pieces of encrypted content is stored in memory card 102 and terminal apparatuses (such as cellular phones) capable of using the plurality of encrypted content vary with each encrypted content, cellular phone 101 does not need to decode all the plurality of encrypted content with a large data amount, and by decoding only encrypted identification data with a small data amount associated with each of the plurality of encrypted content, is capable of determining available encrypted content 104.

In this way, according to cellular phone 101 as a content processing apparatus in this Embodiment, it is possible to more readily distinguish between a plurality of pieces of encrypted content stored in memory card 102 that is a content storage medium, and more promptly decode encrypted content 104 available in cellular phone 101.

In addition, this Embodiment describes the case where a telephone number of cellular phone 101 is used as terminal identifier 114 in cellular phone 101, but the present invention is not limited to such a case. For example, it may be possible to use an identifier for identifying cellular phone 101 such as a serial number of cellular phone 101, data such as a character sequence having some meaning, numeric value, image and audio, or an identifier (such as a membership number) indicating a contract with particular service. Further, as well as using as terminal identifier 114 a telephone number, serial number or other information such as a character sequence without any processing, such a terminal identifier may be converted to be used (as information related to the terminal identifier). By this means, when an encryption method in encrypting content and identification data using the terminal identifier and/or the terminal identifier leaks to a third party, since the terminal identifier is converted into another data usable as an encryption key, it is possible to prevent interpretation of the encrypted content and encrypted identification data that is encrypted using the data (encryption key).

Further, this Embodiment describes the case of using as identification data 115 data such as a character sequence common to systems for writing or reading content in/from a memory card in cellular phone 101, but the present invention is not limited to such a case. It may be possible to use another identifier different from information set as a terminal identifier (for example, when a telephone number is set as terminal identifier 114, a serial number may be used as identification data) , data such as a character sequence with some meaning, numeric value, image and audio, or an identifier (such as a membership number) indicating a contract with particular service.

Furthermore, this Embodiment describes the case of using memory card 102 as a content storage medium to store content, but the present invention is not limited to such a case. As long as a device is a content storage medium capable of storing digitalized content, other devices are widely applied.

### (Embodiment 2)

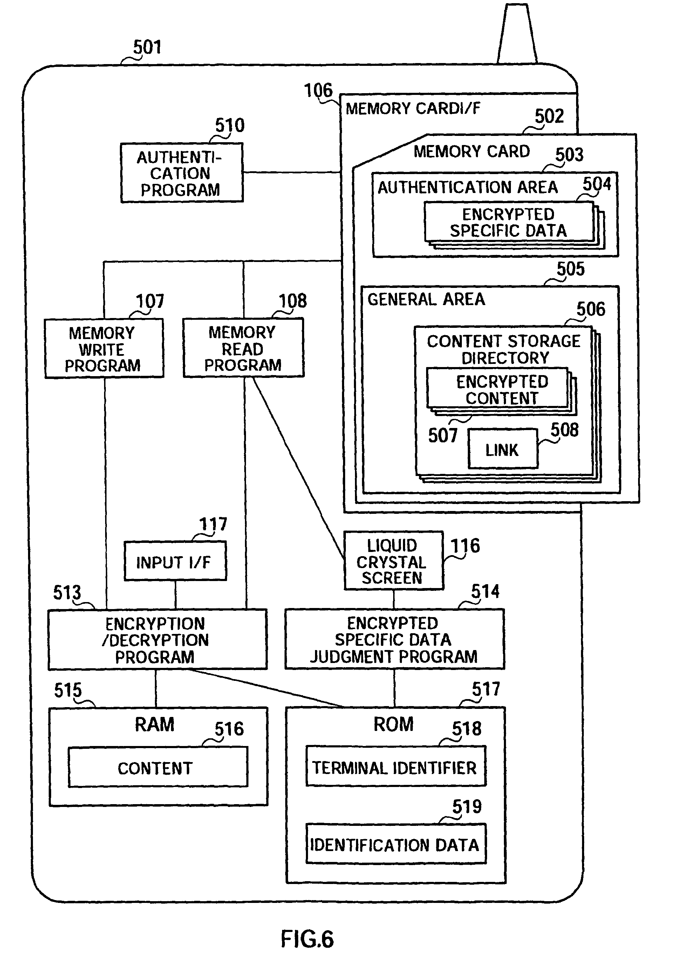

FIG.6 is a block diagram illustrating a configuration of cellular phone 501 as a content processing apparatus according to Embodiment 2 of the present invention. In addition, the same sections as those in FIGs.1 and 2 are assigned the same reference numerals as those in FIGs.1 and 2, and specific descriptions thereof are omitted.

Cellular phone 501 as shown in FIG.6 differs from cellular phone 101 with the configuration as shown in FIG.2 in the respects that cellular phone 501 has authentication program 510, memory card 502 is provided with authentication area 503 to which access is enabled by performing authentication using authentication program 510, and that authentication area 503 stores encrypted identification data 504.

FIG.6 is a block diagram illustrating the configuration of cellular phone 501 with the same reference numerals assigned to the same sections as in FIG.2. FIG.6 particularly shows a structure concerning content processing among the configuration of cellular phone 501. Cellular phone 501 includes memory write program 107, memory read program 108, encryption/decryption program 513, encrypted identification data judgment program 514, and authentication program 510, each operated by a CPU (Central Processing Unit) not shown.

In FIG.6, cellular phone 501 stores content 516 downloaded from a content provider via cellular phone networks in RAM (Random Access Memory) 515. Encryption/decryption program 513 is to encrypt content 516 stored in RAM 515. Content 516 encrypted by encryption/decryption program 513 is written in general area 505 of memory card 502 by memory write program 107 via memory card interface 106. General area 505 is an area which is provided in cellular phone 501 and accessible with eliminating the need of authentication processing of authentication program 510.

ROM (Read Only Memory) 517 stores terminal identifier 518 comprised of, for example, a telephone number unique to cellular phone 501, and identification data 519 comprised of, for example, a character sequence common to systems for writing or reading content in a memory card shown in this Embodiment.

Upon encrypting content 516, encryption/decryption program 513 encrypts content 516 using terminal identifier 518 stored in ROM (Read Only Memory) 517. Further, when encrypting content 516 to store in memory card 502, encryption/decryption program 513 encrypts identification data 519 stored in ROM 517 using terminal identifier 518. Memory write program 107 stores encrypted identification data 504 that is a result of the encryption in authentication area 503 in memory card 502. Encrypted identification data 504 in authentication area 503 is associated with encrypted content 507 via link information 508 stored in the same directory as the directory in which encrypted content 507 of general area 505 is stored. Thus, encrypted identification data 504 and encrypted content 507 is associated with each other via link information 508, and is separately stored in authentication area 503 and general area 505, respectively.

When encrypted content 507 stored in memory card 502 is read into cellular phone 501, memory read program 108 of cellular phone 501 reads encrypted identification data 504 in authentication area 503 associated with the encrypted content 507 via link information 508 stored in the same directory as that of the encryption content 507, from memory card 502 via memory card interface 106, prior to the processing for reading the encrypted content 507.

Read encrypted identification data 504 is decoded by encrypted identification data judgment program 514. In this case, encrypted identification data judgment program 514 decodes the encrypted identification data 504 using terminal identifier 518 unique to cellularphone 501 stored in ROM 517, and when the decoded identification data is in agreement with identification data 519 stored in ROM 517, judges that the decoded encrypted identification data 504 in memory card 502 is data that is written in memory card 502 by cellular phone 501.

Thus, when it is determined that encrypted identification data 504 stored in memory card 502 is data that is written in memory card 502 by cellular phone 501, encryption/decryption program 513 decodes encrypted content 507 in general area 505 associated with the encrypted identification data 504, and stores the decoded content 516 in RAM 515.

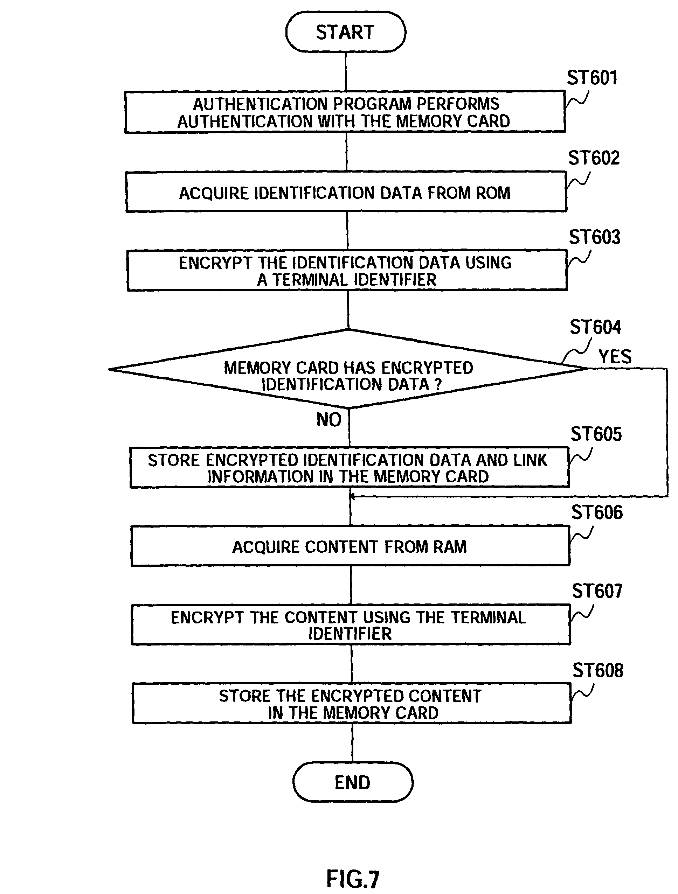

FIG.7 is a flowchart illustrating processing procedures of authentication program 510 and encryption/decryption program 513 in storing in memory card 501 content 516 stored in RAM 516 of cellular phone 501.

As shown in FIG.7, in step ST601, authentication program 510 performs authentication with memory card 502. In addition, memory card 502 is provided with an authentication program not shown, executes authentication processing with authentication program 510 of cellular phone 501, and when such a result is obtained as the authentication result that cellular phone 501 is a terminal device allowed to gain access to authentication area 503 of memory card 502, permits access to authentication area 503.

When the access is allowed to authentication area 503 of memory card 502 from cellular phone 501 as a result of the authentication processing in step ST601, authentication program 510 notifies encryption/decryption program 513 of the authentication result. Encryption/decryption program 513 having received the notification acquires identification data 519 from ROM 517 in step ST602. Then, encryption/decryption program 513 shifts to step ST603, encrypts the identification data 519 acquired in step ST602, for example, in the triple DES encryption scheme, using terminal identifier 518 unique to cellular phone 501 stored in ROM 517, and thereby generates encrypted identification data 504.

Encryption/decryption program 513 shifts to step ST604, and judges whether the same encrypted identification data as the encrypted identification data 504 generated in step ST603 is already stored in authentication area 503 in memory card 502 inserted into memory card interface 106. The negative result obtained in this step means that memory card 502 does not store encrypted identification data 504 encrypted using terminal identifier 518 unique to cellular phone 501 i.e. encrypted identification data 504 written by cellular phone 501. At this point, encryption/decryption program 513 shifts to step ST605, stores the encrypted identification data 504 encrypted in step ST603 and link information 508 in memory card 502 using memory write program 107, and shifts to step ST606. In this case, encryption/decryption program 513 stores encrypted identification data 504 in authentication area 503, while storing link information 508 in content storage directory 506 in general area 505. Link information 508 is information for associating encrypted identification data 504 stored in authentication area 503 with encrypted content 507 in general area 505 associated with the data 504.

Meanwhile, the positive result obtained in step ST604 means that memory card 502 stores encrypted identification data 504 written by cellular phone 501. In this case, encryption/decryption program 513 shifts to step ST606.

After acquiring content 516 fromRAM 515in step ST606, encryption/decryption program 513 shifts to step ST607, and encrypts the content 516 acquired in step ST606, for example, in the triple DES encryption scheme, using terminal identifier 518 in ROM 517.

Then, encryption/decryption program 513 shifts to step ST608, and stores encrypted content 507 encrypted in step ST607 in the directory associated by link information 508 with encrypted identification data 504 stored in memory card 502 in step ST605.

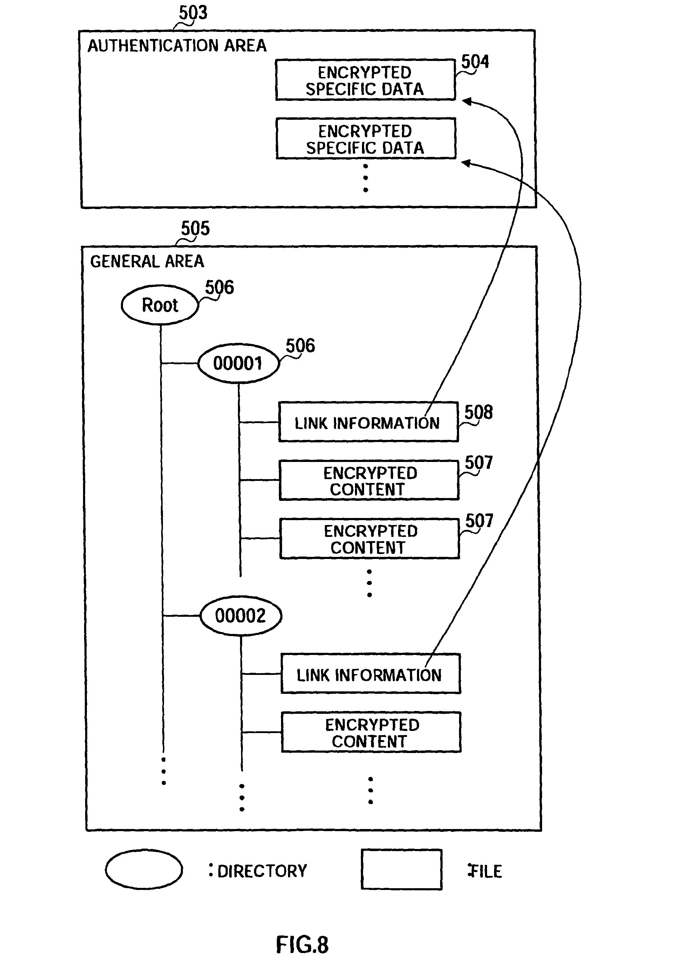

In this way, as shown in FIG.8, in memory card 502, content 516 (encrypted content 507) and identification data 519 (encrypted identification data 504) both encrypted using the same terminal identifier 518 is stored in memory card 502 in association with one another via link information 508. Thus, by associating encrypted content 507 with encrypted identification data 504 via link information 508, while storing encrypted identification data 504 to confirm the presence of encrypted content 507 in authentication area 503, it is made possible only for cellular phone 501 accessible to authentication area 503 to confirm the presence of encrypted content 507.

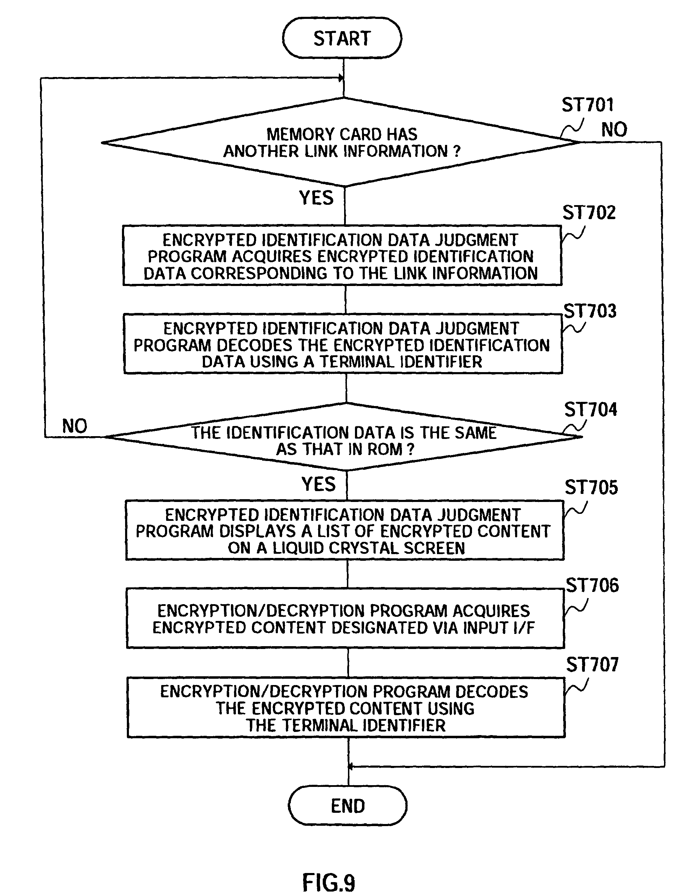

FIG.9 is a flowchart illustrating processing procedures of encryption/decryption program 513 and encrypted identification data judgment program 514 when cellular phone 501 reads and decodes encrypted content 507 and encrypted identification data 504 stored inmemory card 502 in the processing procedures in FIG.7.

As shown in FIG.9, in step ST701, encrypted identification data judgment program 514 checks whether or not link information 508 is present in general area 505 in memory card 502. The negative result obtained in this step means that link information 508 is not stored in memory card 502 i.e. encrypted content 507 is not stored. In this case, encrypted identification data judgment program 514 finishes the processing procedures.

In contrast thereto, the positive result obtained in step ST701 means that link information 508 is stored in memory card 502, i.e. encrypted content 507 is present. In this case, encrypted identification data judgment program 514 shifts to step ST702, performs authentication processing by authentication program 510, and acquires encrypted identification data 504 corresponding to link information 508 from authentication area 503 in memory card 502 using memory read program 108.

Then, encrypted identification data judgment program 514 shifts to step ST703, and decodes the encrypted identification data 504 acquired in step ST702 using terminal identifier 518 stored in ROM 517.

Encrypted identification data judgment program 514 shifts to step ST704, compares the identification data decoded in step ST703 with identification data 519 stored in ROM 517, and judges whether the decoded identification data is the same as identification data 519 stored in ROM 517.

When cellular phone 501 encrypts content 516 to write in memory card 502, encrypted identification data 504 obtained by encrypting identification data 519 using terminal identifier 518 is always stored in association with encrypted content 507. Accordingly, when the identification data decoded in step ST703 is in agreement with identification data 519 stored in ROM 517 as a result of comparison, it is meant that the decoded encrypted identification data 504 is written in memory card 502 by cellular phone 501, in other words, encrypted content 507 stored in memory card 502 in association with the encrypted identification data 504 via link information 508 is written in memory card 502 by cellular phone 501.

Accordingly, when the identification data decoded in step ST703 is in agreement with identification data 519 stored in ROM 517 as a result of comparison, encrypted identification data judgment program 514 notifies the result of agreement to encryption/decryption program 513, and shifts from step ST704 to step ST705.

In contrast thereto, when the identification data decoded in step ST703 is not in agreement with identification data 519 stored in ROM 517 as a result of comparison, encrypted identification data judgment program 514 notifies the result of disagreement to encryption/decryption program 513, returns to step ST701, judges whether or not memory card 502 has another link information 508, and when another link information 508 exists, executes the same processing on the link information 508.

In step ST705, encrypted identification data judgment program 514 displays a list of identification data 519 with the result of agreement obtained in step ST704. In other words, encrypted content 507 available in cellular phone 501 is displayed in list form by identification data 519 which is associated with the content 507 and has a small data amount.

In addition, this Embodiment describes the case of decoding encrypted identification data 504 associated with encrypted content 507 to display in list form. However, the present invention is not limited to such a case, and it may be possible to store only a title of content corresponding to identification data 516 in RAM 515 of cellular phone 501 when encrypted content 507 is stored in memory card 502 in association with the identification data 516, and display in list form the stored title based on a result on whether identification data 519 is in agreement in step ST704.

When a list of content is displayed on liquid crystal screen 116 in step ST705, a user operates input interface 117, and thereby selects desired content from the displayed list.

By this means, encryption/decryption program 513 shifts to step ST706, using memory read program 108, reads encrypted content 507 designated through input interface 117 from memory card 502, shifts to a subsequent step, ST707, and using terminal identifier 518 stored in ROM 517, decodes the encrypted content 507 acquired from memory card 502 in step ST706 to store in RAM 518.

Content 516 stored in RAM 515 is initiated by a user of cellular phone 501 operating input interface 117, and used for the user.

In the aforementioned constitution, when writing encrypted content 507 in memory card 502, cellular phone 501 stores encrypted identification data 504 associated with the encrypted content 507 in authentication area 503 in memory card 502.

The encrypted identification data 504 is, for example, obtained by encrypting some character sequence, and thus has a data amount extremely smaller than that of encrypted content 507. Accordingly, before reading encrypted content 507 from memory card 502 to decode, cellular phone 501 reads encrypted identification data 504 associated with the encrypted content 507 to decode, and determines whether or not the decoded identification data is written in memory card 502 by cellular phone 501. It is thereby possible to readily judge whether or not content available in cellular phone 501 is present in memory card 502 based on identification data with a small data amount.

In the case of this Embodiment, encrypted identification data 504 is stored in authentication area 503, whereby access to authentication area 503 in memory card 502 from cellular phone 501 is executed after carrying out the authentication processing. Accordingly, terminal apparatuses except cellular telephone 501 accessible to o authentication area 503 are hard to acquire encrypted identification data 504, and difficult to readily determine available encrypted content.

In this way, according to cellular phone 501 as a content processing apparatus in this Embodiment, it is possible to more readily distinguish between a plurality of pieces of encrypted content stored in memory card 502 that is a content storage medium only in cellular phone 501 capable of performing authentication.

In addition, this Embodiment describes the case where a telephone number of cellular phone 501 is used as terminal identifier 518 in cellular phone 501, but the present invention is not limited to such a case. For example, it may be possible to use an identifier for identifying cellular phone 501 such as a serial number of cellular phone 501, data such as a character sequence with some meaning, numeric value, image and audio, or an identifier (such as membership number) indicating a contract with particular service. Further, as well as using as terminal identifier 518 a telephone number, serial number or other information such as a character sequence without any processing, such a terminal identifier may be converted to be used (as information related to the terminal identifier). By this means, when an encryption method in encrypting content and identification data using the terminal identifier and/or the terminal identifier leaks to a third party, since the terminal identifier is converted into another data usable as an encryption key, it is possible to prevent interpretation of the encrypted content and encrypted identification data that is encrypted using the data (encryption key).

Further, this Embodiment describes the case of using as identification data 519 data such as a character sequence common to systems for writing or reading content in/from a memory card in cellular phone 501, but the present invention is not limited to such a case. It may be possible to use another identifier different from information set as a terminal identifier (for example, when a telephone number is set as terminal identifier 518, a serial number may be used as identification data) , data such as a character sequence with some meaning, numeric value, image and audio, or an identifier (such as a membership number) indicating a contract with particular service.

Furthermore, this Embodiment describes the case of specifying encrypted identification data in the authentication area using link information stored in the general area, but the present invention is not limited to such a case. For example, information (such as a route name and directory name) indicating a storage location in the general area of the encrypted content stored in the general area may be made the same as information (such as a route name and directory name) indicating a storage location in the authentication area of the encrypted identification data stored in the authentication area corresponding to the information of the content. By thus preparing the same directory structure, it is possible to associate encrypted identification data in the authentication area with the encrypted content in the general area without using link information.

Moreover, this Embodiment describes the case of using memory card 502 as a content storage medium to store content, but the present invention is not limited to such a case. As long as a device is a content storage medium capableofstoring digitalizedinformation,otherdevices are widely applied.

### (Embodiment 3)

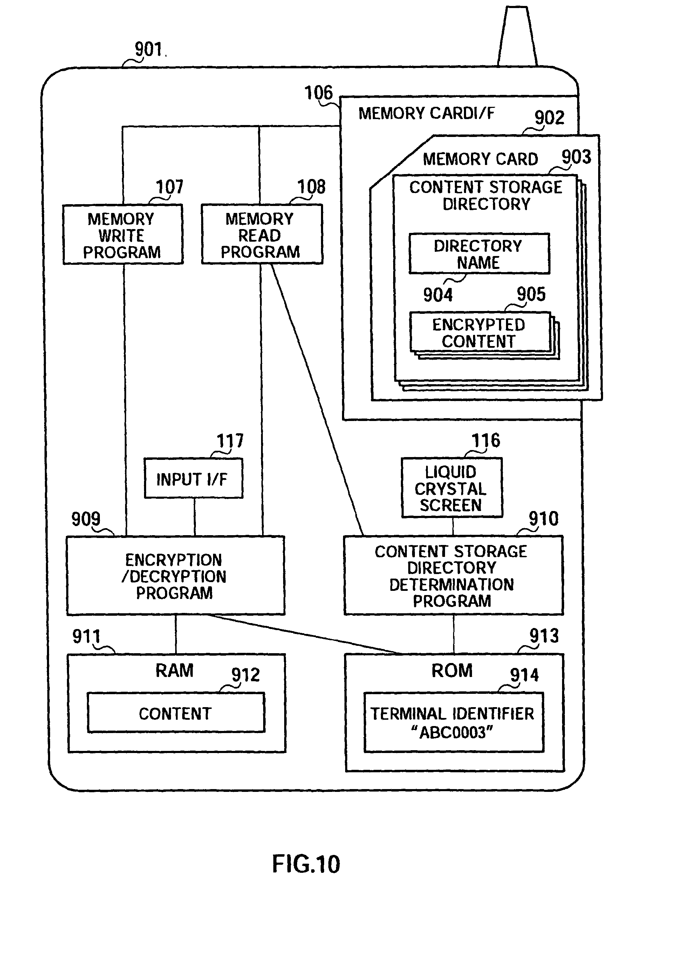

FIG.10 is a block diagram illustrating a configuration of cellular phone 901 as a content processing apparatus according to Embodiment 3 of the present invention. In addition, the same sections as those in FIGs.1 and 2 are assigned the same reference numerals as those in FIGs.1 and 2, and specific descriptions thereof are omitted.

Cellular phone 901 as shown in FIG.10 differs from cellular phone 101 with the configuration as shown in FIG.2 in the respects that used as terminal identifier 914 stored in ROM 913 is a name of a directory that stores encrypted content 905 in memory card 902, and that the directory name is used as a substitute for identification data 115 (FIG.2).

FIG.10 is a block diagram illustrating the configuration of cellular phone 901 with the same reference numerals assigned to the same sections as in FIG.2. FIG.10 particularly shows a structure concerning content processing among the configuration of cellular phone 901. Cellular phone 901 includes memory write program 107, memory read program 108, encryption/decryption program 909 and content storage directory determination program 910, each operated by a CPU (Central Processing Unit) not shown.

In FIG.10, cellular phone 901 stores content 912 downloaded from a content provider via cellular phone networks in RAM (Random Access Memory) 911. Encryption/decryption program 909 is to encrypt content 912 stored in RAM 911. Content 912 encrypted by encryption/decryption program 909 is written in memory card 902 by memory write program 107 via memory card interface 106, as encrypted content 905.

ROM (Read Only Memory) 913 stores terminal identifier 914 that is an identifier comprised of a predeterminedcharactersequenceuniquetocellularphone 901 and that is used as directory name 904 in storing encrypted content in memory card 902.

Encryption/decryption program 909 encrypts content 912 using terminal identifier 914 stored in ROM (Read Only Memory) 913. Further, when storing the content 912 (encrypted content 905) encrypted in memory card 902, encryption/decryption program 909 uses terminal identifier 914 stored in ROM 913 as directory name 904 of content storage directory (hereinafter, simply referred to as a directory) 903 that is a storage destination.

In the case where encrypted content 905 stored in memory card 902 is read into cellular phone 901, memory read program 108 of cellular phone 901 acquires the directory name storing the encrypted content 905 from memory card 902, prior to the processing for reading the encrypted content 905, and when the acquired directory name is in agreement with terminal identifier 914 stored in ROM 913, is capable of judging that the acquired directory name is set in memory card 902 by cellular phone 901.

Thus, when it is determined that the acquired directory name in memory card 902 is set in memory card 902 by cellular phone 901, encryption/decryption program 909 decodes encrypted content 905 stored in directory 903 with the directory name 904, and stores the decoded content 912 in RAM 911.

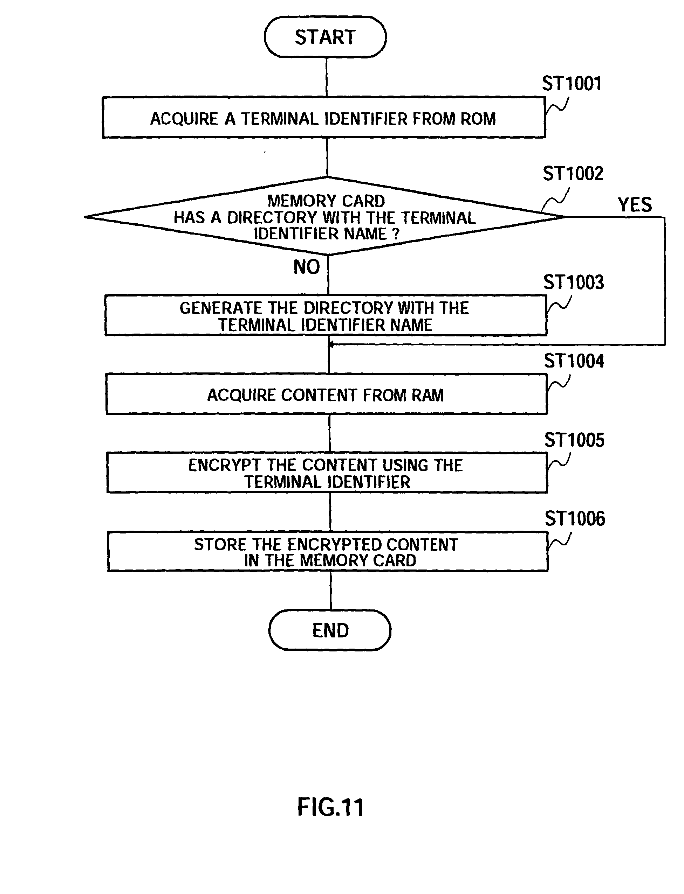

FIG.11 is a flowchart illustrating processing procedures of encryption/decryption program 909 in storing in memory card 902 content 912 stored in RAM 911 of cellular phone 901.

As shown in FIG.11, encryption/decryption program 909 acquires terminal identifier 914 from ROM 913 in step ST1001. Then, encryption/decryption program 909 shifts to step ST1002, and judges whether or not directory 903 with the terminal identifier name acquired in step ST1001 is present in memory card 902.

The negative result obtained in this step means that memory card 902 does not have directory 903 set by cellular phone 901. At this point, encryption/decryption program 909 shifts to step ST1003, generates directory 903 with the terminal identifier name stored in ROM 913, and shifts to step ST1004.

Meanwhile, the positive result obtained in step ST1002 means that directory 903 generated by cellular phone 901 is already present in memory card 902, and at this point, encryption/decryption program 909 shifts to step ST1004.

After acquiring content 912 from RAM 911 in step ST1004, encryption/decryption program 909 shifts to step ST1005, and encrypts the content 912 acquired in step ST1004, for example, in the triple DES encryption scheme, using terminal identifier 914 in ROM 913.

Then, encryption/decryption program 909 shifts to step ST1006, and stores encrypted content 905 encrypted in step ST1005 in directory 903 generated in step ST1003.

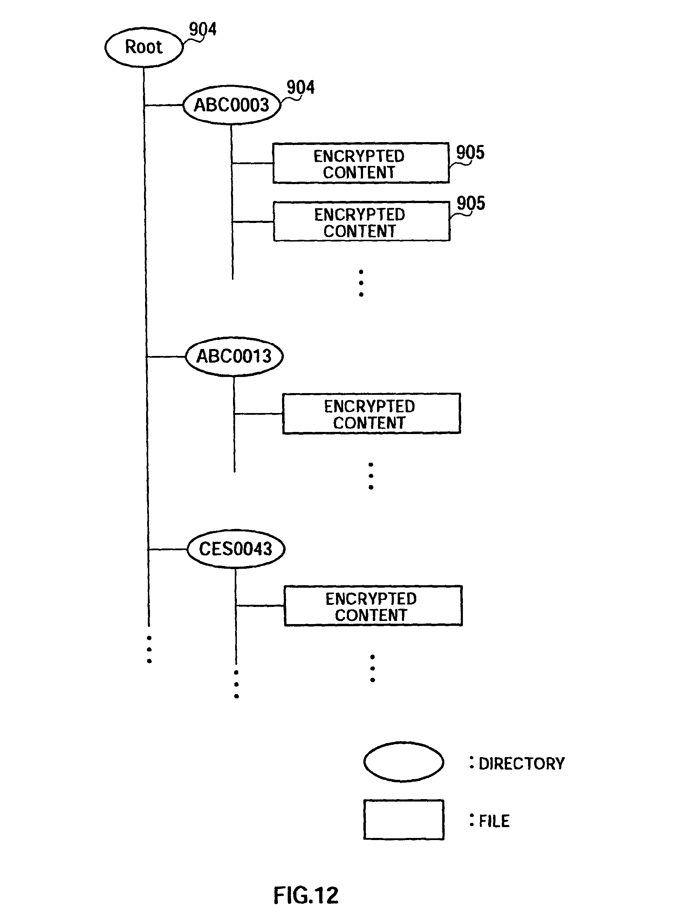

In this way, as shown in FIG.12, in memory card 902, content 912 (encrypted content 905) encrypted using the same terminal identifier 914, i.e. encrypted content 905 written by a single cellular phone 901 is stored in directory 903 with the terminal identifier name unique to cellular phone 901.

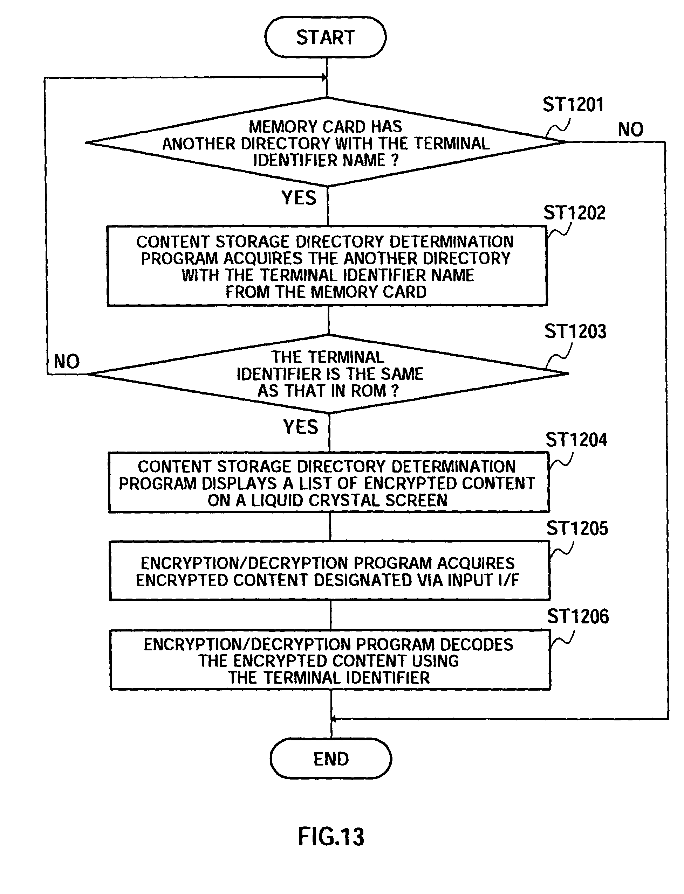

FIG.13 is a flowchart illustrating processing procedures of encryption/decryption program 909 and content storage directory determination program 910 when cellular phone 901 reads encrypted content 905 stored in memory card 902 in the processing procedures in FIG.11 to decode.

As shown in FIG.13, in step ST1201, content storage directory determination program 910 checks whether or not a directory is present in memory card 902. The negative result obtained in this step means that memory card 902 does not have encrypted content 905 to read, and content storage directory determination program 910 finishes the processing procedures.

In contrast thereto, the positive result obtained in step ST1201 means that memory card 902 has encrypted content 905 to read, and content storage directory determination program 910 shifts to step ST1202, acquires a directory name from memory card 902 using memory read program 108, and shifts to step ST1203. In step ST1203, content storage directory determination program 910 judges whether or not the directory name acquired in step ST1202 is the same as terminal identifier 914 stored in ROM 913.

The negative result obtained in this step means that the directory name acquired from memory card 902 is not directory name 904 set by cellular phone 901, i.e. that encrypted content stored in the directory of the name is not available in cellular phone 901. At this point, content storage directory determination program 910 notifies the result of disagreement to encryption/decryption program 909, returns to step ST1201, judges whether or not another directory is present in memory card 902, and when another directory exists, executes the same processing on the directory.

In contrast thereto, the positive result obtained in step ST1203 means that the acquired directory is set by cellular phone 901, i.e. that encrypted content stored in the directory is available in cellular phone 901, and at this point, content storage directory determination program 910 notifies the result of agreement to encryption/decryption program 909, and returns to step ST1204.

In step ST1204, content storage directory determination program 910 displays in list form on liquid crystal screen 116 the information of directory 904 with the result of agreement in step ST1203, or information (for example, a tile) related to encrypted content 905 stored in the directory.

In this way, liquid crystal screen 116 displays information related to encrypted content 905 available in cellular phone 901 among encrypted content stored in memory card 902.

In addition, as a constitution for displaying in list form the information on encrypted content 905 available in cellular phone 901, for example, a method is considered of storing only limited information such as a title corresponding to encrypted content 905 in RAM 911 of cellular phone 901 in storing the encrypted content 905 in memory card 902, and displaying in list form the stored limited information based on the result of agreement in step ST1203.

In step ST1204, when a list of content is displayed on liquid crystal screen 116, a user operates input interface 117, and thereby selects desired content from the displayed list.

By this means, encryption/decryption program 909 shifts to step ST1205, reads encrypted content 905 designated through input interface 117 from memory card 902 using memory read program 108, shifts to a subsequent step ST1206, and decodes the encrypted content 905 acquired from memory card 902 in step ST1205, using terminal identifier 914 stored in ROM 913, to store in RAM 911.

Content 912 stored in RAM 911 is initiated by the user of cellular phone 901 operating input interface 117, and used by the user.

In the aforementioned constitution, cellular phone 901 uses terminal identifier 914 unique to cellular phone 901 as a name of directory 904 to store content 905, in writing encrypted content 905 in memory card 902.

The directory name has a data amount extremely smaller than that of encrypted content 905. Accordingly, before reading encrypted content 905 from memory card 902 to decode, cellular phone 901 reads the directory name of directory 904 storing the encrypted content 905, and determines whether or not the directory name agrees with terminal identifier 914 of cellular phone 901.

When the directory name agrees with terminal identifier 914 of cellular phone 901, it is meant that encrypted content 905 stored in directory 904 with the directory name is written in memory card 902 by cellular phone 901.

Accordingly, it is possible to read the encrypted content 905 into cellular phone 901 to be used in cellular phone 901, and encryption/decryption program 909 reads the encrypted content 905 frommemory card 902, and decodes the read encrypted content 905.

Thus, on the condition that a directory name is in agreement with terminal identifier 914 stored in ROM 913, encrypted content 905 stored in directory 904 with the directory name is read into cellular phone 901 from memory card 902 to be decode, whereby cellular phone 901 is capable of selecting only encrypted content 905 available in cellular phone 901 to decode.

Accordingly, when a plurality of pieces of encrypted content is stored in memory card 902 and terminal apparatuses (such as cellular telephones) capable of using the plurality of encrypted content vary with each encrypted content, cellular phone 901 does not need to decode all the plurality of encrypted content with a large data amount, and only by acquiring a directory with a small data amount, is capable of determining available encrypted content 905.

In this way, according to cellular phone 901 as a content processing apparatus in this Embodiment, it is possible to more readily distinguish between a plurality of pieces of encrypted content stored in memory card 902 that is a content storage medium, and more promptly decode encrypted content 905 available in cellular phone 901. Further, according to cellular phone 901 as a content processing apparatus in this Embodiment, by using terminal identifier 914 stored in ROM 913 without any conversion as a directory name in memory card 902, it is possible to determine encrypted content 905 in a further simplified constitution.

In addition, this Embodiment describes the case of using memory card 902 as a content storage medium to store content, but the present invention is not limited to such a case. As long as a device is a content storage medium capable of storing digitalized information, other devices are widely applied.

### (Embodiment 4)

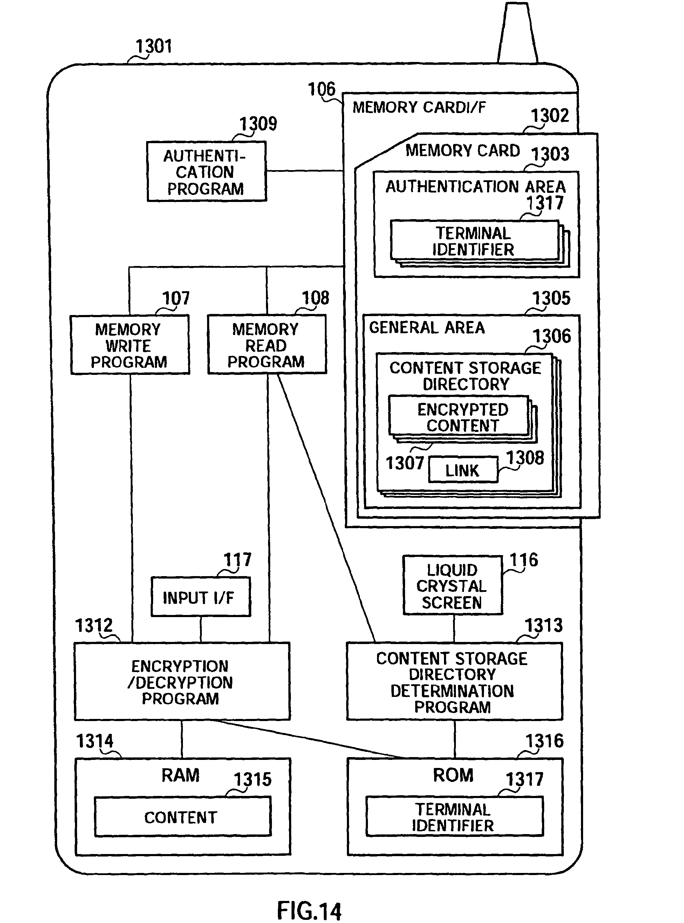

FIG.14 is a block diagram illustrating a configuration of cellular phone 1301 as a content processing apparatus according to Embodiment 4 of the present invention. In addition, the same sections as those in FIGs.1 and 2 are assigned the same reference numerals as those in FIGs.1 and 2, and specific descriptions thereof are omitted.

Cellular phone 1301 as shown in FIG.14 differs from cellular phone 101 with the configuration as shown in FIG.2 in the respects that cellular phone 1301 has authentication program 1309, memory card 1302 is provided with authentication area 1303 to which access is enabled by performing authentication using authentication program 1309, and that authentication area 1303 stores terminal identifier 1317 unique to the terminal apparatus (cellular phone 1301).

FIG.14 is a block diagram illustrating the configuration of cellular phone 1301 with the same reference numerals assigned to the same sections as in FIG.2. FIG.14 particularly shows a structure concerning content processing among the configuration of cellular phone 1301. Cellular phone 1301 includes memory write program 107, memory read program 108, encryption/decryption program 1312, content storage directory determination program 1313, and authentication program 1309, each operated by a CPU (Central Processing Unit) not shown.

In FIG.14, cellular phone 1301 stores content 1315 downloaded from a content provider via cellular phone networks in RAM (Random Access Memory) 1314. Encryption/decryption program 1312 is to encrypt content 1315 stored in RAM 1314. Content 1315 encrypted by encryption/decryption program 1312 is written in general area 1305 of memory card 1302 by memory write program 107 via memory card interface 106. General area 1305 is an area which is provided in cellular phone 1301 and accessible with eliminating the need of authentication processing of authentication program 1309.

ROM (Read Only Memory) 1316 stores terminal identifier 1317 comprised of, for example, a telephone number unique to cellular phone 1301.

Encryption/decryption program 1312 encrypts content 1315 using terminal identifier 1317 stored in ROM (Read Only Memory) 1316. Further, when encrypting content 1315 to store in memory card 1302, encryption/decryption program 1312 stores terminal identifier 1317 stored in ROM 1316 in authentication area 1303 of memory card 1302 using memory write program 107. Terminal identifier 1317 in authentication area 1303 is associated with encrypted content 1307 via link information 1308 stored in the same directory as the directory in which the encrypted content 1307 of general area 1305 is stored. Thus, terminal identifier 1317 and encrypted content 1307 is associated with each other via link information 1308, and is separately stored in authentication area 1303 and general area 1305, respectively.

When encrypted content 1307 stored in memory card 1302 is read into cellular phone 1301, memory read program 108 of cellular phone 1301 reads terminal identifier 1317 in authentication area 1303 associated with the content 1307 via link information 1308 stored in the same directory as that of encryption content 1307, from memory card 1302 via memory card interface 106, prior to the processing for reading encrypted content 1307.

Content storage directory determination program 1313 compares the read terminal identifier 1317 with terminal identifier 1317 unique to cellular phone 1301 stored in ROM 1316. When "agreement" is obtained as a result of the comparison, it is determined that terminal identifier 1317 stored in memory card 1302 is written in memory card 1302 by cellular phone 1301.

Thus, when it is recognized that terminal identifier 1317 stored in memory card 1302 is written in memory card 1302 by cellular phone 1301, encryption/decryption program 1312 decodes encrypted content 1307 in general area 1305 associated with terminal identifier 1317 in memory card 1302, and stores the decoded content 1315 in RAM 1314.

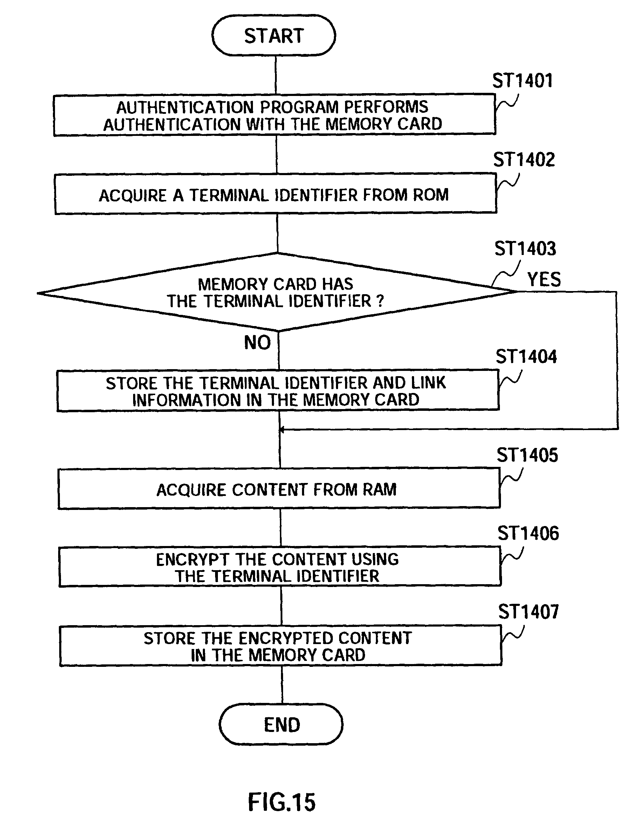

FIG.15 is a flowchart illustrating processing procedures of authentication program 1309 and encryption/decryption program 1312 in storing in memory card 1302 content 1315 stored in RAM 1314 of cellular phone 1301.

As shown in FIG.15, in step ST1401, authentication program 1309 performs authentication with memory card 1302. In addition, memory card 1302 is provided with an authentication program not shown, executes authentication processing with authentication program 1309 of cellular phone 1301, and when such a result is obtained as the authentication result that cellular phone 1301 is a terminal device accessible to authentication area 1303 of memory card 1302, permits access to authentication area 1303.

When the access is allowed to authentication area 1303 of memory card 1302 from cellular phone 1301 as a result of the authentication processing in step ST1401, authentication program 1309 notifies encryption/decryption program 1312 of the authentication result. Encryption/decryption program 1312 having received the notification acquires terminal identifier 1317 from ROM 1316 in step ST1402. Then, encryption/decryption program 1312 shifts to step ST1403, and judges whether or not the same terminal identifier as the terminal identifier 1317 acquired from ROM 1316 in step ST1402 is already stored in authentication area 1303 in memory card 1302 inserted into memory card interface 106. The negative result obtained in this step means that memory card 1302 does not store terminal identifier 1317 written by cellular phone 1301. At this point, encryption/decryption program 1312 shifts to step ST1404, stores terminal identifier 1317 acquired in step ST1402 and link information 1308 in memory card 1302 using memory write program 107, and shifts to step ST1405. In this case, encryption/decryption program 1312 stores terminal identifier 1317 in authentication area 1303, while storing link information 1308 in content storage directory 1306 in general area 1305. Link information 1308 is information for associating terminal identifier 1317 stored in authentication area 1303 with encrypted content 1307 stored in content storage directory 1306 in general area 1305 associated with the identifier 1317.

Meanwhile, the positive result obtained in step ST1403 means that memory card 1302 stores terminal identifier 1317 written by cellular phone 1301. In this case, encryption/decryption program 1312 shifts to step ST1405.

In step ST1405, encryption/decryption program 1312 acquires content 1315 from RAM 1314, shifts to stepST1406, and encrypts content 1315 acquired in step ST1404, for example, in the triple DES encryption scheme, using terminal identifier 1317 in ROM 1316.

Then, encryption/decryption program 1312 shifts to step ST1407, and stores encrypted content 1307 encrypted in step ST1406 in the directory associated by link information 1308 with terminal identifier 1317 stored in memory card 1302 in step ST1404.

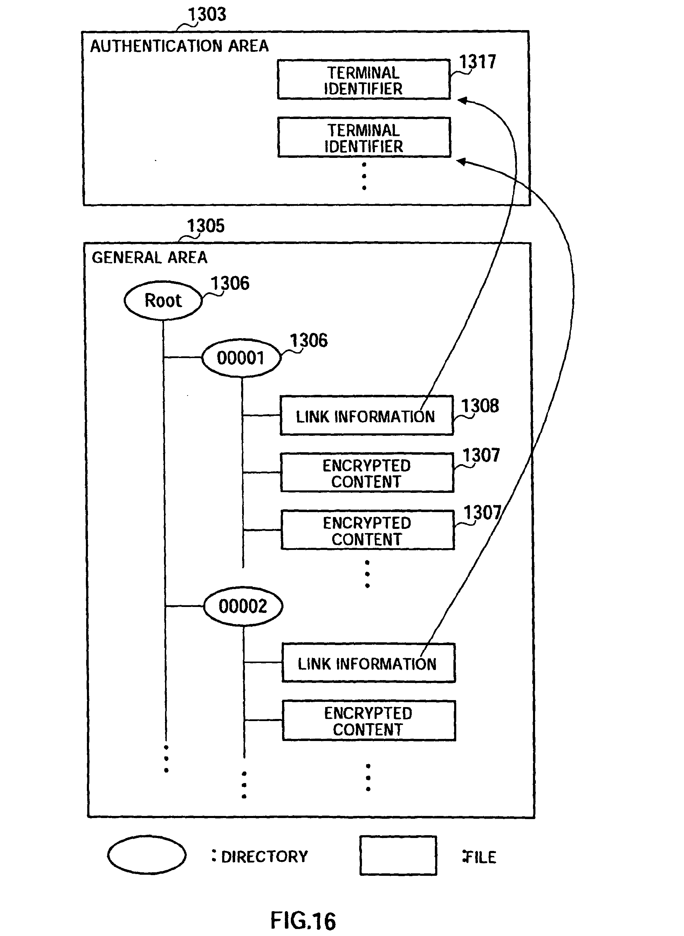

In this way, as shown in FIG.16, in memory card 1302, content 1315 (encrypted content 1307) encrypted using terminal identifier 1317 and terminal identifier 1317 is stored in association with one another via link information 1308. Thus, by associating encrypted content 1307 with terminal identifier 1317 via link information 1308, while storing terminal identifier 1317 to confirm the presence of encrypted content 1307 in authentication area 1303, it is made possible only for cellular phone 1301 accessible to authentication area 1303 to confirm the presence of encrypted content 1307.

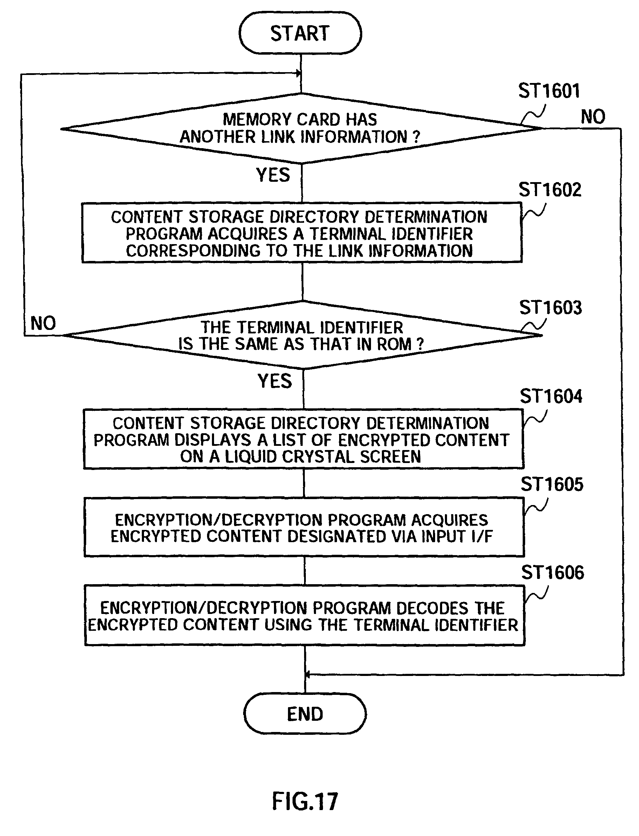

FIG.17 is a flowchart illustrating processing procedures of encryption/decryption program 1312 and content storage directory determination program 1313 when cellular phone 1301 reads and decodes encrypted content 1307 stored in memory card 1302 in the processing procedures in FIG.15.

As shown in FIG.17, in step ST1601, content storage directory determination program 1313 judges whether or not link information 1308 is present in general area 1305 in memory card 1302. The negative result obtained in this step means that link information 1308 is not stored in memory card 1302 i.e. encrypted content 1307 is not stored. In this case, content storage directory determination program 1313 finishes the processing procedures.

In contrast thereto, the positive result obtained in step ST1601 means that link information 1308 is stored in memory card 1302, i.e. encrypted content 1307 ispresent. In this case, content storage directory determination program 1313 shifts to step ST1602, performs authentication processing by authentication program 1309, and acquires terminal identifier 1317 corresponding to link information 1308 from authentication area 1308 in memory card 1302 using memory read program 108.

Then, content storage directory determination program 1313 shifts to step ST1603, compares the terminal identifier acquired in step ST1602 with terminal identifier 1317 stored in ROM 1316, and judges whether or not the acquired terminal identifier is the same as terminal identifier 1317 stored in ROM 1316.

When cellular phone 1301 encrypts content 1315 to write in memory card 1302, terminal identifier 1317 is always stored in association with encrypted content 1307. Accordingly, when the terminal identifier acquired in step ST1602 is in agreement with terminal identifier 1317 stored in ROM 1316 as a result of the comparison, it is meant that the terminal identifier acquired from memory card 1302 is written in memory card 1302 by cellular phone 1301, in other words, encrypted content 1307 stored in memory card 1302 in association with the terminal identifier 1317 via link information 1308 is written in memory card 1302 by cellular phone 1301.

Accordingly, when terminal identifier 1317 acquired from memory card 1302 in step ST1602 is in agreement with terminal identifier 1317 stored in ROM 1316 as a result of the comparison, content storage directory determination program 1313 notifies the result of agreement to encryption/decryption program 1312, and shifts from step ST1603 to step ST1604.

In contrast thereto, when the terminal identifier acquired from memory card 1302 in step ST1602 is not in agreement with terminal identifier 1317 stored in ROM 1316 as a result of the comparison, content storage directory determination program 1313 notifies the result of disagreement to encryption/decryption program 1312, returns to step ST1601, judges whether or not memory card 1302 has another link information 1308, and when another link information 1308 exists, executes the same processing on the link information 508.

In step ST1604, content storage directory determination program 1313 displays in list formon liquid crystal screen 116 the information of terminal identifier 1317 with the result of agreement in step ST1603, or information on encrypted content 1307 stored in directory 1306 associated with the terminal identifier 1317 through link information 1308.

In this way, liquid crystal screen 116 displays the information on encrypted content 1307 available in cellular phone 1301 among encrypted content stored in memory card 1302.

In addition, as a constitution for displaying in list form the information on encrypted content 1307 available in cellular phone 1301, for example, a method is considered of storing only limited information such as a title corresponding to encrypted content 1307 in RAM 1314 of cellular phone 1301 in storing the encrypted content 1307 in memory card 1302, and displaying in list form the stored limited information based on the result of agreement in step ST1603.

In step ST1604, when a list of content is displayed on liquid crystal screen 116, a user operates input interface 117, and thereby selects desired content from the displayed list.

By this means, encryption/decryption program 1312 shifts to step ST1605, reads encrypted content 1307 designated via input interface 117 from memory card 1302 using memory read program 108, shifts to a subsequent step ST1606, and decodes the encrypted content 1307 acquired from memory card 1302 in step ST1605, using terminal identifier 1317 stored in ROM 1316, to store in RAM 1314.

Content 1315 stored in RAM 1314 is initiated by the user of cellular phone 1301 operating input interface 117, and used by the user.

In the aforementioned constitution, when writing encrypted content 1307 in memory card 1302, cellularphone 1301 stores terminal identifier 1317 associated with the encrypted content 1307 in authentication area 1303 in memory card 1302.

The terminal identifier 1317 is, for example, a telephone number of cellular phone 1301, and thus has a data amount extremely smaller than that of encrypted content 1307. Accordingly, before reading encrypted content 1307 from memory card 1302 to decode, cellular telephone 1301 reads terminal identifier 1317 associated with the encrypted content 1307 from memory card 1302, and determines whether or not the terminal identifier 1317 is written in memory card 1302 by cellular phone 1301. It is thereby possible to readily judge whether or not content available in cellular phone 1301 is present in memory card 1302 based on terminal identifier 1317 with a small data amount.

In the case of this Embodiment, terminal identifier 1317 is stored in authentication area 1303, whereby access to authentication area 1303 in memory card 1302 from cellular phone 1301 is executed after carrying out the authentication processing. Accordingly, terminal apparatuses except cellular phone 1301 accessible to authentication area 1303 are hard to acquire terminal identifier 1317, and difficult to readily determine available encrypted content.

In this way, according to cellular phone 1301 as a content processing apparatus in this Embodiment, it is possible to more readily distinguish between a plurality of pieces of encrypted content stored in memory card 1302 that is a content storage mediumonly in cellular phone 1301 capable of performing authentication.

In addition, this Embodiment describes the case of storing terminal identifier 1317 stored in ROM 1316 of cellular phone 1301 in authentication area 1303 of memory card 1302 without encryption. However, the present invention is not limited to such a case, and terminal identifier 1317 may be encrypted and then stored in authentication area 1303 in memory card 1302.

Further, this Embodiment describes the case of storing terminal identifier 1317 stored in ROM 1316 of cellular phone 1301 in authentication area 1303 of memory card 1302 without any conversion. However, the present invention is not limited to such a case, and it may be possible that terminal identifier 1317 is converted using a predetermined conversion expression and stored in authentication area 1303, and cellular phone 1301 reads the converted terminal identifier from authentication 1303 to perform inverse conversion using an inverse conversion expression, and compares the inverse-converted identifier with terminal identifier 1317 in ROM 1316. In this case, as a conversion expression, various expressions may be used such as extracting a specific position (for example, lower four digits) of terminal identifier 1317, or rearranging a character sequence of terminal identifier 1317.

In addition, this Embodiment describes the case where a telephone number of cellular phone 1301 is used as terminal identifier 1317 in cellular phone 1301, but the present invention is not limited to such a case. For example, it may be possible to use an identifier for identifying cellular phone 1301 such as a serial number of cellular phone 1301, data such as a character sequence with some meaning, numeric value, image and audio, or an identifier (such as a membership number) indicating a contract with particular service. Further, as well as using as terminal identifier 1317 a telephone number, serial number or other information such as a character sequence without any processing, such a terminal identifier may be converted to be used (as information related to the terminal identifier). By this means, when an encryption method in encrypting content using the terminal identifier and/or the terminal identifier leaks to a third party, since the terminal identifier is converted into another data usable as an encryption key, it is possible to prevent interpretation of the encrypted content that is encrypted using the data (encryption key).

Further, this Embodiment describes the case of encrypting content 1315 using terminal identifier 1317 to store in memory card 1302, but the present invention is not limited to such a case. Content 1315 may be encrypted using information related to terminal identifier 1317.

Furthermore, this Embodiment describes the case of specifying a terminal identifier in the authentication area using link information stored in the general area, but the present invention is not limited to such a case. For example, information (such as a route name and directory name) indicating a storage location in the general area of the encrypted content stored in the general area may be made the same as information (such as a route name and directory name) indicating a storage location in the authentication area of the terminal identifier stored in the authentication area corresponding to the information on the identifier. By thus preparing the same directory structure, it is possible to associate the terminal identifier in the authentication area with the encrypted content in the general area without using link information.

Moreover, this Embodiment describes the case of using memory card 1302 as a content storage medium to store content, but the present invention is not limited to such a case. As long as a device is a content storage medium capable of storing digitalized information, other devices are widely applied.

### (Embodiment 5)

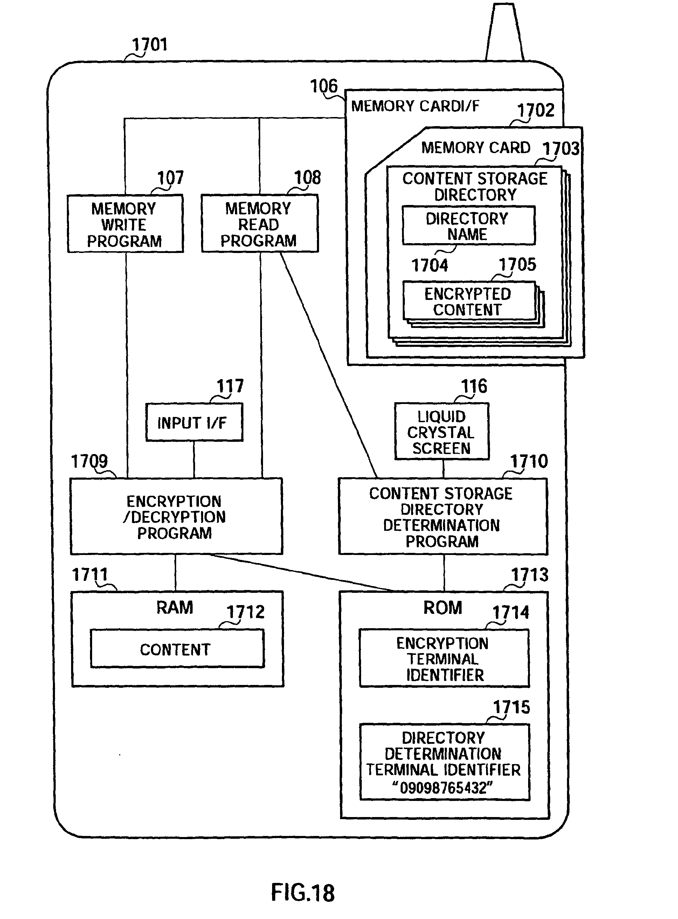

FIG.18 is a block diagram illustrating a configuration of cellular phone 1701 as a content processing apparatus according to Embodiment 5 of the present invention. In addition, the same sections as those in FIGs.1 and 2 are assigned the same reference numerals as those in FIGs.1 and 2, and specific descriptions thereof are omitted.

Cellular phone 1701 as shown in FIG.18 differs from cellular phone 101 with the configuration as shown in FIG.2 in the respect that as terminal identifiers stored in ROM 1713, there are prepared encryption terminal identifier 1714 to encrypt content 1712, and directory determination terminal identifier 1715 used as directory name 1704 of content storage directory (hereinafter, simply referred to as a directory) 1703 that stores encrypted content in memory card 1702.

FIG.18 is a block diagram illustrating the configuration of cellular phone 1701 with the same reference numerals assigned to the same sections as in FIG.2. FIG.18 particularly shows a structure concerning content processing among the configuration of cellular phone 1701. Cellular phone 1701 includes memory write program 107, memory read program 108, and encryption/decryption program 1709 and content storage directory determination program 1710, each operated by a CPU (Central Processing Unit) not shown.

In FIG.18, cellular phone 1701 stores content 1712 downloaded from a content provider via cellular phone networks in RAM (Random Access Memory) 1711. Encryption/decryption program 1709 is to encrypt content 1712 stored in RAM 1711. Content 1712 encrypted by encryption/decryption program 1709 is written in memory card 1702 by memory write program 107 via memory card interface 106, as encrypted content 1705.

ROM (Read Only Memory) 1713 stores encryption terminal identifier 1714 which is an identifier comprised of a predetermined character sequence (such as a serial number) unique to cellular phone 1701 and is used in encrypting content 1712, and directory determination terminal identifier 1715 which is an identifier comprised of a predetermined character sequence (such as a telephone number) unique to cellular phone 1701 and used as directory name 1704 in storing encrypted content in memory card 1702. Different character sequences are used for encryption terminal identifier 1714 and directory determination terminal identifier 1715.

Encryption/decryption program 1709 encrypts content 1712 using encryption terminal identifier 1714 stored in ROM (Read Only Memory) 1713. Further, when storing the content 1712 (encrypted content 1705) encrypted in memory card 1702, encryption/decryption program 1709 sets directory name 1704 of directory 1703 that is a storage destination as a terminal identifier name for directory determination terminal identifier 1715 stored in ROM 1713.

In the case where encrypted content 1705 stored in memory card 1702 is read into cellular phone 1701, memory read program 108 of cellular phone 1701 acquires directory name 1704 storing the encrypted content 1705 from memory card 1702, prior to the processing for reading the encrypted content 1705, and when the acquired directory name 1704 is in agreement with directory determination terminal identifier 1715 stored in ROM 1713, determines that the acquired directory name 1704 in memory card 1702 is set in memory card 1702 by cellular phone 1701.

Thus, when it is recognized that the directory name 1704 in memory card 1702 is set in memory card 1702 by cellular phone 1701, encryption/decryption program 1709 decodes encrypted content 1705 stored in directory 1703 with the directory name 1704, and stores the decoded content 1712 in RAM 1711.

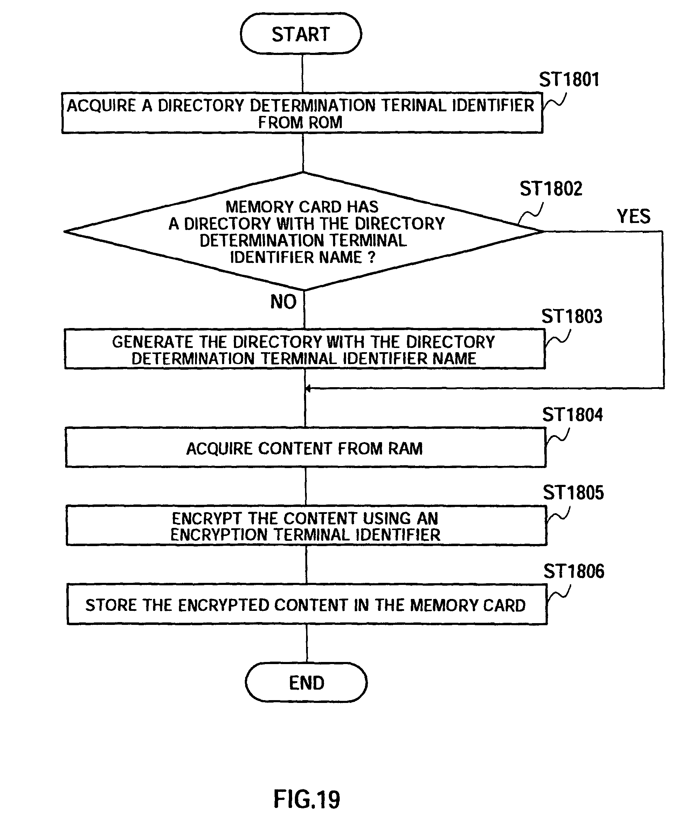

FIG.19 is a flowchart illustrating processing procedures of encryption/decryption program 1709 in storing in memory card 1702 content 1712 stored in RAM 1711 of cellular phone 1701.

As shown in FIG.19, encryption/decryption program 1709 acquires directory determination terminal identifier 1715 from ROM 1713 in step ST1801. Then, encryption/decryption program 1709 shifts to step ST1802, and judges whether or not memory card 1702 has directory 1703 with directory name 1704 that is the same as the terminal identifier name of directory determination terminal identifier 1715 acquired in step ST1801.

The negative result obtained in this step means that memory card 1702 does not have directory 1703 set by cellular phone 1701. At this point, encrypt ion/decrypt ion program 1709 shifts to step ST1803, generates directory 1703 with directory name 1704 the same as the terminal identifier name of directory determination terminal identifier 1715 stored in ROM 1713, and shifts to step ST1804.

In contrast thereto, the positive result obtained in step ST1802 means that directory 1703 generated by cellular phone 1701 is already present in memory card 1702, and at this point, encryption/decryption program 1709 shifts to step ST1804.

After acquiring content 1712 from RAM 1711 in step ST1804, encryption/decryption program 1709 shifts to step ST1805, and encrypts the content 1712 acquired in step ST1804, for example, in the triple DES encryption scheme, using encryption terminal identifier 1714 in ROM 1713.

Then, encryption/decryption program 1709 shifts to step ST1806, and stores encrypted content 1705 encrypted in step ST1805 in directory 1703 with directory name 1704 generated in step ST1803.

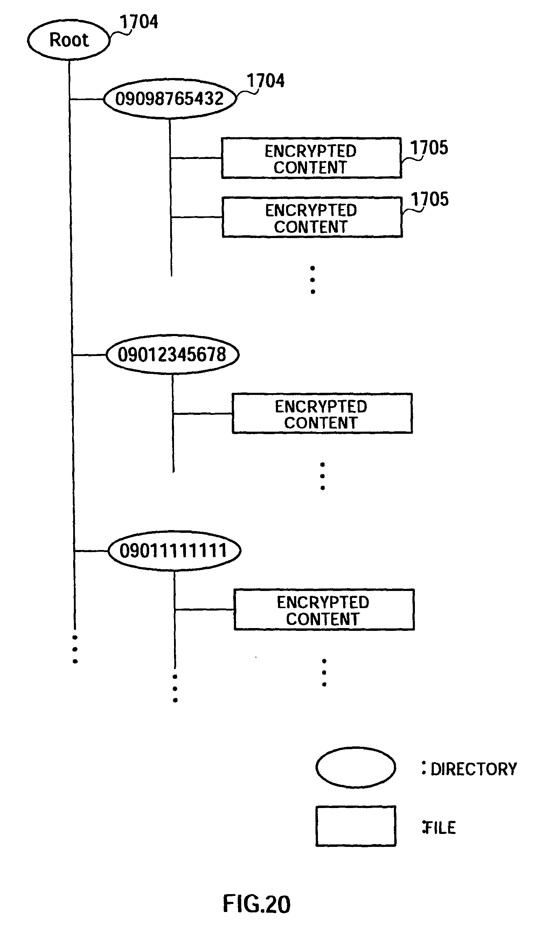

In this way, as shown in FIG.20, memory card 1702 stores content 1712 (encrypted content 1705) encrypted using encryption terminal identifier 1714, i. e. encrypted content 1705 written by a single cellular phone 1701 in directory 1703 with directory name 1704 the same as the terminal identifier name unique to the cellular phone.

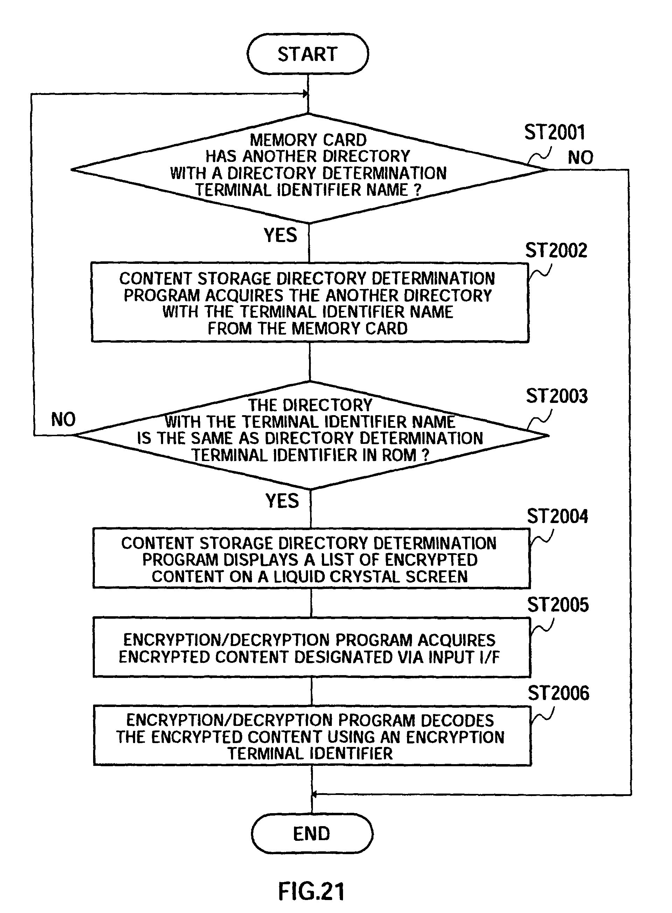

FIG.21 is a flowchart illustrating processing procedures of encryption/decryption program 1709 and content storage directory determination program 1710 when cellular phone 1701 reads encrypted content 1705 stored in memory card 1702 in the processing procedures in FIG. 19 to decode.

As shown in FIG.21, in step ST2001, content storage directory determination program 1710 checks whether or not a directory is present in memory card 1702. The negative result obtained in this step means that memory card 1702 does not have encrypted content 1705 to read, and content storage directory determination program 1710 finishes the processing procedures.

In contrast thereto, the positive result obtained in step ST2001 means that memory card 1702 has encrypted content 1705 to read, and content storage directory determination program 1710 shifts to step ST2002, acquires a directory name from memory card 1702 using memory read program 108, and shifts to step ST2003. In step ST2003, content storage directory determination program 1710 judges whether or not the directory name acquired in step ST2002 is the same as that of directory determination terminal identifier 1715 stored in ROM 1713.

The negative result obtained in this step means that the directory name acquired from memory card 1702 is not directory name 1704 set by cellular phone 1701, i.e. that encrypted content stored in the directory of the name is not available in cellular phone 1701, and at this point, content storage directory determination program 1710 notifies the result of disagreement to encryption/decryption program 1709, returns to step ST2001, judges whether or not another directory is present in memory card 1702, and when another directory exists, executes the same processing on the directory.

In contrast thereto, the positive result obtained in step ST2003 means that the acquired directory is set by cellular phone 1701, i.e. that encrypted content 1705 stored in directory 1703 is available in cellular phone 1701, and at this point, content storage directory determination program 1710 notifies the result of agreement to encryption/decryption program 1709, and returns to step ST2004.

In step ST2004, content storage directory determination program 1710 displays in list form on liquid crystal screen 116 the information on directory name 1704 with the result of agreement in step ST2003, or information on encrypted content 1705 stored in directory 1703 with directory name 1704.

In this way, liquid crystal screen 116 displays the information on encrypted content 1705 available in cellular phone 1701 among encrypted content stored in memory card 1702.

In addition, as a constitution for displaying in list form the information on encrypted content 1705 available in cellular phone 1701, for example, a method is considered of storing only limited information such as a title corresponding to the encrypted content 1705 in RAM 1711 of cellular phone 1701 in storing the encrypted content 1705 in memory card 1702, and displaying in list form the stored limited information based on the result of agreement in step ST2004.

In step ST2004, when a list of content is displayed on liquid crystal screen 116, a user operates input interface 117, and thereby selects desired content from the displayed list.

By this means, encryption/decryption program 1709 shifts to step ST2005, reads encrypted content 1705 designated through input interface 117 from memory card 1702 using memory read program 108, shifts to a subsequent step, ST2006, and decodes the encrypted content 1705 acquired from memory card 1702 in step ST2005, using encryption terminal identifier 1714 stored in ROM 1713, to store in RAM 1711.

Content 1712 stored in RAM 1711 is initiated by the user of cellular phone 1701 operating input interface 117, and used by the user.

In the aforementioned constitution, cellular phone 1701 uses directory determination terminal identifier 1715 unique to cellular phone 1701 as directory name 1704 of a directory to store content 1705, in writing encrypted content 1705 in memory card 1702.

The directory name has a data amount extremely smaller than that of encrypted content 1705. Accordingly, before reading encrypted content 1705 from memory card 1702 to decode, cellular phone 1701 reads directory name 1704 of the directory storing the encrypted content 1705, and determines whether or not the directory name agrees with directory determination terminal identifier 1715 of cellular phone 1701.

When the directory name agrees with directory determination terminal identifier 1715 of cellular phone 1701, it is meant that encrypted content 1705 stored in the directorywith directory name 1704 is written inmemory card 1702 by cellular phone 1701.

Accordingly, it is possible to read the encrypted content 1705 into cellular phone 1701 to be used in cellular phone 1701, and encryption/decryption program 1709 reads the encrypted content 1705 from memory card 1702, and decodes the read encrypted content 1705.

Thus, on the condition that a directory name is in agreement with directory determination terminal identifier 1715 stored in ROM 1713, encrypted content 1705 stored in the directory with directory name 1704 is read into cellular phone 1701 from memory card 1702 to be decode, whereby cellular phone 1701 is capable of selecting only encrypted content 1705 available in cellular phone 1701 based on the directory name with a small data amount.

Accordingly, when a plurality of pieces of encrypted content is stored in memory card 1702 and terminal apparatuses (such as cellular telephones) capable of using the plurality of encrypted content vary with each encrypted content, cellular phone 1701 does not need to decode all the plurality of encrypted content with a large data amount, and only by acquiring a directory with a small data amount, is capable of determining available encrypted content 905.

Further, content 1712 is encrypted using encryption terminal identifier 1714 different from directory determination terminal identifier 1715 for use in directory name 1704, and is stored in the directory with directory name 1704 the same as directory determination terminal identifier 1715, whereby it is possible to prevent encrypted content 1705 from being decoded improperly even when directory name 1704 is known to a third party.

In this way, according to cellular phone 1701 as a content processing apparatus in this Embodiment, it is possible to more readily distinguish between a plurality of pieces of encrypted content stored in memory card 1702 that is a content storage medium, and more promptly decode encrypted content 1705 available in cellular phone 1701.

In addition, this Embodiment describes the case of using directory determination terminal identifier 1715 stored in ROM 1713 of cellular phone 1701 without encryption, as directory name 1704 to store encrypted content in memory card 1702. However, the present invention is not limited to such a case, and directory determination terminal identifier 1715 may be encrypted and used as a directory name.

Further, this Embodiment describes the case of using directory determination terminal identifier 1715 as directory name 1704 in memory card 1702 for storing encrypted content 1705. However, the present invention is not limited to such a case, and identification data 115 as described in FIG.2 may be used.

In addition, this Embodiment describes the case where a telephone number, serial number and so on of cellular phone 1701 are used as encryption terminal identifier 1714 and directory determination terminal identifier 1715 in cellular phone 1701, but the present invention is not limited to such a case. For example, it may be possible to use data such as a character sequence with some meaning, numeric value, image and audio, or an identifier (such as a membership number) indicating a contract with particular service. Further, as well as using as encryption terminal identifier 1714 and directory determination terminal identifier 1715 a telephone number, serial number or other information such as a character sequence without any processing, such terminal identifiers (encryption terminal identifier 1714 and directory determination terminal identifier 1715) may be converted to be used (as information related to the terminal identifier). By this means, when an encryption method in encrypting content using the terminal identifier and/or the terminal identifier leaks to a third party, since the terminal identifier is converted into another data usable as an encryption key, it is possible to prevent interpretation of the encrypted content that is encrypted using the data (encryption key).

Further, this Embodiment describes the case of encrypting content 1712 using encryption terminal identifier 1714 to store in memory card 1702, but the present invention is not limited to such a case. Content 1712 may be encrypted using information related to encryption terminal identifier 1714.

Furthermore, this Embodiment describes the case of using memory card 1702 as a content storage medium to store content, but the present invention is not limited to such a case. As long as a device is a content storage medium capable of storing digitalized information, other devices are widely applied.

### (Embodiment 6)

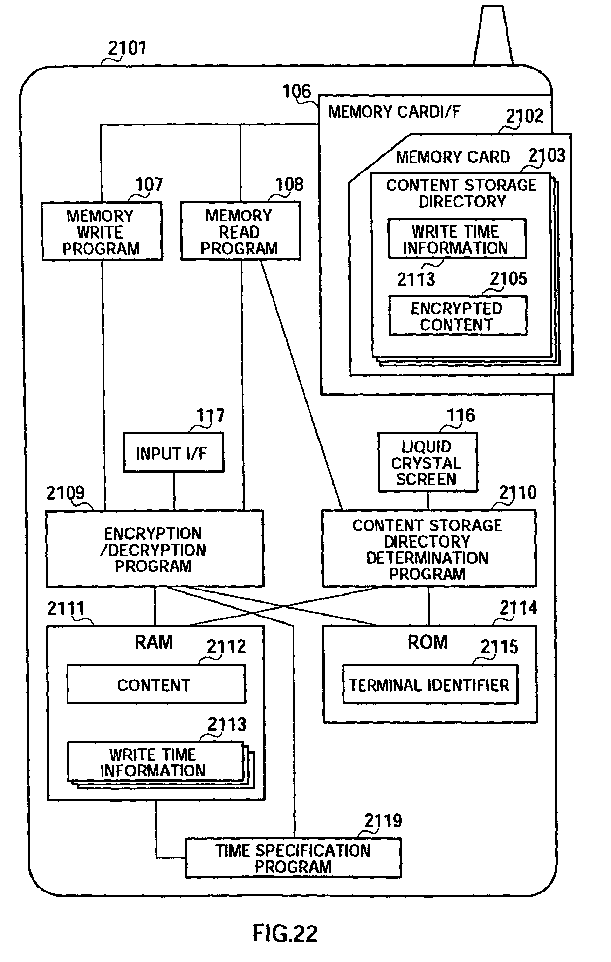

FIG.22 is a block diagram illustrating a configuration of cellular phone 2101 as a content processing apparatus according to Embodiment 6 of the present invention. In addition, the same sections as those in FIGs.1 and 2 are assigned the same reference numerals as those in FIGs.1 and 2, and specific descriptions thereof are omitted.

Cellular telephone 2101 as shown in FIG.22 differs from cellular phone 101 with the configuration as shown in FIG.2 in the respect that write time is written in association with encrypted content 2105, instead of identification data 115 as described in FIG.2, in writing content 2112 stored in RAM 2111 in memory card 2102.

FIG.22 is a block diagram illustrating the configuration of cellular phone 2101 with the same reference numerals assigned to the same sections as in FIG.2. FIG.22 particularly shows a structure concerning content processing among the configuration of cellular phone 2101. Cellular phone 2101 includes memory write program 107, memory read program 108, encryption/decryption program 2109, content storage directory determination program 2110 and time specification program 2119, each operated by a CPU (Central Processing Unit) not shown.

In FIG.22, cellular phone 2101 stores content 2112 downloaded from a content provider via cellular phone networks in RAM (Random Access Memory) 2111. Encryption/decryption program 2109 is to encrypt content 2112 stored in RAM 2111. Content 2112 encrypted by encryption/decryption program 2109 is written in memory card 2102 as encrypted content 2105 bymemorywrite program 107 via memory card interface 106.

ROM (Read Only Memory) 2114 stores terminal identifier 2115 which is comprised of a predetermined character sequence (such as a telephone number) unique to cellular phone 2101 and which is used in encrypting content 2112.

Encryption/decryption program 2109 encrypts content 2112 using terminal identifier 2115 stored in ROM (Read Only Memory) 2114. Further, when storing content 2112 (encrypted content 2105) encrypted in memory card 2102, encryption/decryption program 2109 stores write time information 2113 indicative of write time specified by time specification program 2119 in the same directory as that storing encrypted content 2105 inmemory card 2102. Thus, encrypted content 2105 and write time information 2113 is stored in memory card 2102 in association with each other. Further, write time information 2113 stored in memory card 2102 is also stored in RAM 2111 of cellular phone 2101 by encryption/decryption program 2109 and time specification program 2119.

When encrypted content 2105 stored in the predetermined directory, 2103, in memory card 2102 is read into cellular phone 2101, memory read program 108 of cellular phone 2101 adds to list information encrypted content 2105 stored in memory card 2102 in association with write time information 2113 in agreement with write time information 2113 stored in RAM 2111 of cellular phone 2101, prior to the processing for reading encrypted content 2105. It is determined that encrypted content 2105 described in the list is written in memory card 2102 by cellular phone 2101.

Thus, when it is recognized that write time information 2113 stored in memory card 2102 is stored in memory card 2101 by cellular phone 2101, encryption/decryption program 2109 decodes encrypted content 2105 stored in association with write time information 2113, and stores the decoded content 2112 in RAM 2111.

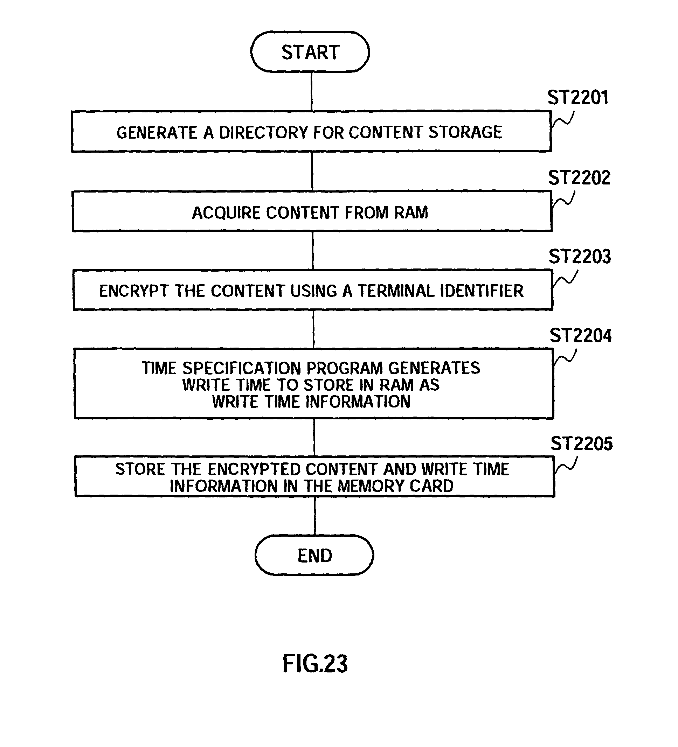

FIG.23 is a flowchart illustrating processing proceduresofencryption/decryption program 2109 and time specification program 2119 in storing in memory card 2102 content 2112 stored in RAM 2111 of cellular phone 2101.

As shown in FIG.23, in step ST2201, encryption/decryption program 2109 generates directory 2103 to store content, shifts to a subsequent step, ST2202, and acquires content 2112 from RAM 2111. Then, encryption/decryption program 2109 shifts to step ST2203, and encrypts the content 2112 acquired in step ST2202, for example, in the triple DES (Data encryption Standard) encryption scheme, using terminal identifier 2115 in ROM 2114.

Encryption/decryption program 2109 shifts to step ST2204, and generates time information of this time using time specification program 2119 to store in RAM 2111 as write time information 2113. In this way, RAM 2111 stores write time information 2113 indicating the time encrypted content 2105 was written in memory card 2102.

Then, encryption /decryption program 2109 shifts to step ST2205, and stores encrypted content 2105 encrypted in step ST2203 in directory 2103 in memory card 2102 generated in step ST2201, together with write time information 2113 generated in step ST2204.

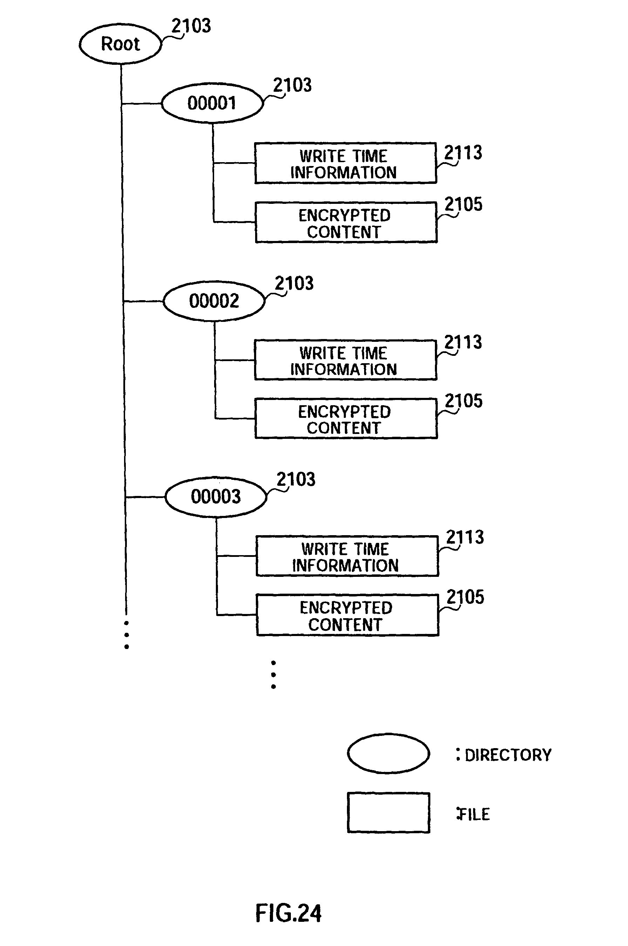

In this way, as shown in FIG. 24, in memory card 2102, encrypted content 2105 and write time information 2113 indicative of the time the content 2105 was written in memory card 2102 is stored in the same directory, 2103, in association with each other.

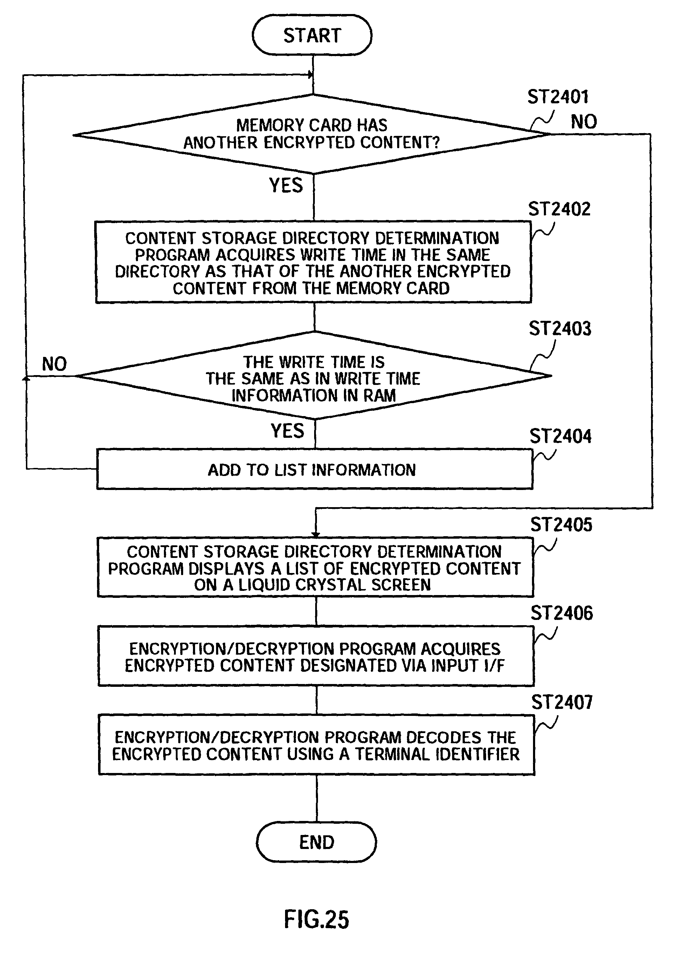

FIG.25 is a flowchart illustrating processing procedures of encryption/decryption program 2109 and content storage directory determination program 2110 when cellular phone 2101 reads and decodes encrypted content 2105 stored in memory card 2102 in the processing procedures in FIG.23.

As shown in FIG.25, in step ST2401, content storage directory determination program 2110 checks whether or not encrypted content is present in memory card 2102. The positive result obtained in this step means a possibility that encrypted content written in memory card 2102 by cellular phone 2102 i.e. encrypted content 2105 available for cellular phone 2101 is stored in memory card 2102, and at this point, content storage directory determination program 2110 shifts to step ST2402, and acquires write time information existing in the same directory as that of the encrypted content.

Then, content storage directory determination program 2110 shifts to step ST2403,and judges whether the write time information acquired in step ST2402 is the same as write time information 2113 stored in RAM 2111 of cellular phone 2101.

The negative result obtained in this step means that the acquired write time information is not written in memory card 2102 by cellular phone 2101, i. e. the encrypted content stored in directory the same as that of the write time information is not written in memory card 2102 by cellular phone 2101. At this point, content storage directory determination program 2110 returns to step ST2401, judges whether or not another encrypted content is stored in memory card 2102, and based on a result of judgment, executes the same processing as described above.

In contrast thereto, the positive result obtained in step ST2403 means that the acquired write time information is write time information 2113 written in memory card 2102 by cellular phone 2101, i.e. encrypted content 2105 stored in directory 2103 the same as that of the write time information 2113 is written in memory card 2102 by cellular phone 2101. At this point, content storage directory determination program 2110 shifts to step ST2404, adds the write time information 2113 to the list information, returns to step ST2401, judges whether or not another encrypted content is stored in memory card 2102, and based on a result of judgment, executes the same processing as described above.

When the judgment of whether or not encrypted content is written by cellular phone 2101 is made on all the encrypted content (write time information) stored in memory card 2102, content storage directory determination program 2110 obtains the negative result in step ST2401, shifts to step ST2405, and displays in list form on liquid crystal screen 116 the information on encrypted content 2105 specified by the list information generated in step ST2404.

In this way, liquid crystal screen 116 displays in list form the information (such as write time information) related to encrypted content 2105 available in cellular phone 2101 among encrypted content stored in memory card 2102.

In addition, as a constitution for displaying in list form the information related to encrypted content 2105 available in cellular phone 2101, for example, a method is considered of storing only limited information such as a title corresponding to encrypted content 2105 in RAM 2111 of cellular phone 2101 in storing the encrypted content 2105 in memory card 2102, and displaying in list form the stored limited information based on the result of agreement in step ST2403.

In step ST2405, when a list of content is displayed on liquid crystal screen 116, a user operates input interface 117, and thereby selects desired content from the displayed list.

By this means, encryption/decryption program 2109 shifts to step ST2406, reads encrypted content 2105 designated through input interface 117 from memory card 2102 using memory read program 108, shifts to a subsequent step, ST2407, and decodes the encrypted content 2105 acquired from memory card 2102 in step ST2406, using terminal identifier 2115 stored in ROM 2114, to store in RAM 2111.

Content 2112 stored in RAM 2111 is initiated by the user of cellular phone 2101 operating input interface 117, and used by the user.

In the aforementioned constitution, when writing encrypted content 2105 in memory card 2102, cellular phone 2101 stores the write time in RAM 2111 using time specification program 2119. In this way, in cellular phone 2101, write time information 2113 is set in the environment of cellular phone 2101. The write time information 2113 is information to identify encrypted content available only for cellular phone 2101.

The set write time information 2113 is stored together with encrypted content 2105 in the same directory 2103 in memory card 2102. In this way, memory card 2102 stores encrypted content 2105 and write time information 2113 for identifying a use environment (content-available cellular phone 2101) of the encrypted content 2105 in association with each other.

Thus, write time information 2113 obtained in writing encrypted content 2105 in memory card 2102 is stored in both cellular phone 2101 and memory card 2102 as a keyword indicating the fact that cellular phone 2101 wrote encrypted content 2105 in memory card 2102.

Accordingly, when memory card 2102 inserted into cellular phone 2101 stores the same write time information as write time information 2113 stored in cellular phone 2101, it is meant that encrypted content 2105 stored in memory card 2102 in association with write time information 2113 was written by cellular phone 2101 i.e. is content available in cellular phone 2101.

Accordingly, when write time information 2113 stored in memory card 2102 in association with encrypted content 2105 agrees with write time information 2113 stored in cellular phone 2101, it is possible to read into cellular phone 2101 encrypted content 2105 stored in memory card 2102 in association with write time information 2113 to be used in cellular phone 2101. In response to a result of agreement, encryption/decryption program 2109 of cellular phone 2102 reads the encrypted content 2105 from memory card 2102, and decodes the read encrypted content 2105.

Thus, on the condition that write time information 2113 in memory card 2102 is in agreement with write time information 2113 stored in RAM 2111, encrypted content 2105 associated with write time information 2113 is read into cellular phone 2101 from memory card 2102 to be decode, whereby cellular phone 2101 is capable of selecting only encrypted content 2105 available in cellular phone 2101, based on write time information 2113 with a small data amount.

Accordingly, when a plurality of pieces of encrypted content is stored in memory card 2102 and terminal apparatuses (such as cellular telephones) capable of using the plurality of encrypted content vary with each encrypted content, cellular phone 2101 does not need to decode all the plurality of encrypted content with a large data amount, and only by acquiring write time information 2113 with a small data amount associated with each of the plurality of encrypted content, is capable of determining available encrypted content 2105.

In this way, according to cellular phone 2101 as a content processing apparatus in this Embodiment, it is possible to more readily distinguish between a plurality of pieces of encrypted content stored in memory card 2102 that is a content storage medium, and more promptly decode encrypted content 2105 available in cellular phone 2101.

In addition, this Embodiment describes the case of using write time information 2113 indicative of the time encrypted content 2105 was written in memory card 2102 as information for distinguishing the encrypted content 2105, but the present invention is not limited to such a case. It may be possible to use set information input by a user operating input interface 117 or a value randomly set by cellular phone 2101 using random numbers. Further, such information including write time information 2113 may be encrypted and stored in memory card 2102. By this means, even when write time information 2113 or the information for distinguishing other encrypted content 2105 (such as the set information set by a user and value randomly set by cellular phone 2101) is known to a third party, it is possible to prevent encrypted content 2105 from being decoded improperly. Further, write time information 2113 may be encrypted using a predetermined identifier or an identifier set by a user and stored in memory card 2102.

Moreover, this Embodiment describes the case of storing write time information 2113 in memory card 2102 without any conversion, but the present invention is not limited to such a case. It may be possible that write time information 2113 is converted using a predetermined conversion expression and stored, and cellular phone 2101 reads the stored information to perform inverse conversion using an inverse conversion expression, and compares the inverse-converted data with write time information 2113 in RAM 2111. In this case, as a conversion expression, various expressions may be used such as extracting a specific position (for example, lower four digits) of write time information 2113, rearranging a character sequence of write time information 2113, and so on.

Further, this Embodiment describes the case of storing write time information 2113 in the same directory 2103 as that of encrypted content 2105, but the present invention is not limited to such a case. It may be possible to provide memory card 2102 with an authentication area to which access is enabled by performing authentication with cellular phone 2101, stores time write information 2113 in the authentication area, and further store link information,indicativeoftherelationship between write time information 2113 in the authentication area and encrypted content 2105 in a general area, in the same directory as that of encrypted content 2105. By this means, only cellular phone 2101 having succeeded authentication with memory card 2102 is capable of acquiring write time information 2113.

In addition, this Embodiment describes the case where a telephone number of cellular phone 2101 is used as terminal identifier 2115 in cellular phone 2101, but the present invention is not limited to such a case. For example, it may be possible to use an identifier for identifying cellular telephone 2101 such as a serial number of cellular telephone 2101, data such as a character sequence with some meaning, numeric value, image and audio, or an identifier (such as a membership number) indicating a contract with particular service. Further, as well as using as terminal identifier 2115 a telephone number, serial number or other information such as a character sequence without any processing, such a terminal identifier may be converted to be used (as information related to the terminal identifier). By this means, when an encryption method in encrypting content and identification data using the terminal identifier and/or the terminal identifier leaks to a third party, since the terminal identifier is converted into another data usable as an encryption key, it is possible to prevent interpretation of the encrypted content and encrypted identification data that is encrypted using the data (encryption key).

Moreover, this Embodiment describes the case of using memory card 2102 as a content storage medium to store content, but the present invention is not limited to such a case. As long as a device is a content storage medium capable of storing digitalized information, other devices are widely applied.

### (Embodiment 7)

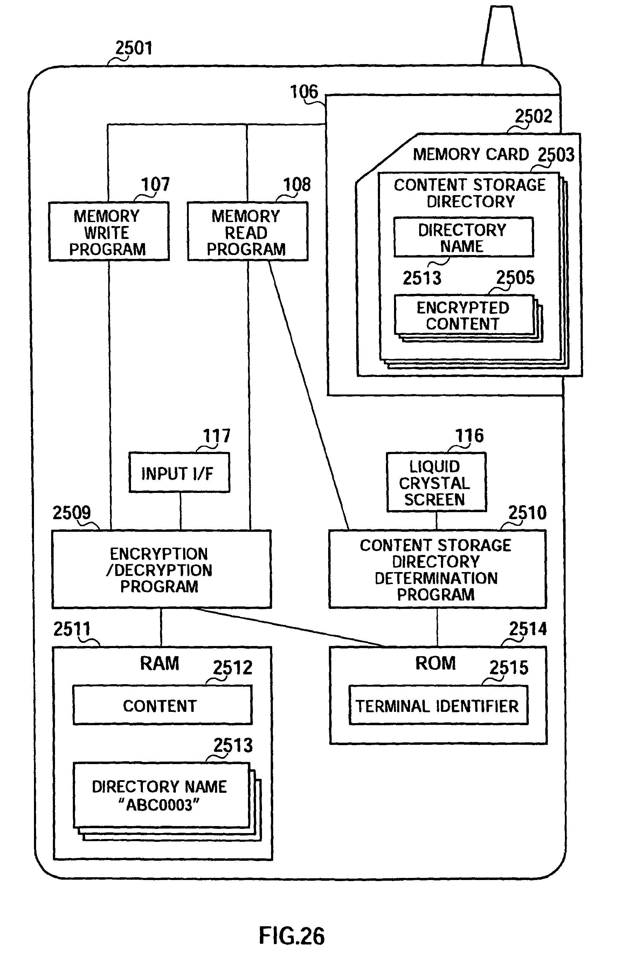

FIG.26 is a block diagram illustrating a configuration of cellular phone 2501 as a content processing apparatus according to Embodiment 7 of the present invention. In addition, the same sections as those in FIGs.1 and 2 are assigned the same reference numerals as those in FIGs.1 and 2, and specific descriptions thereof are omitted.

Cellular telephone 2501 as shown in FIG.26 differs from cellular phone 101 with the configuration as shown in FIG. 2 in the respect that directory name 2513 in memory card 2502 is set in association with encrypted content 2505, instead of identification data 115 as described in FIG.2, in writing content 2512 stored in RAM 2511 in memory card 2502.

FIG.26 is a block diagram illustrating the configuration of cellular phone 2501 with the same reference numerals assigned to the same sections as in FIG.2. FIG.26particularlyshowsastructureconcerning content processing among the configuration of cellular phone 2501. Cellular phone 2501 includes memory write program 107, memory read program 108, encryption/decryption program 2509, and content storage directory determination program 2510, each operated by a CPU (Central Processing Unit) not shown.

In FIG.26, cellular phone 2501 stores content 2512 downloaded from a content provider via cellular phone networks in RAM (Random Access Memory) 2511. Encryption/decryption program 2509 is to encrypt content 2512 stored in RAM 2511. Content 2512 encrypted by encryption/decryption program 2509 is written in memory card 2502 as encrypted content 2505 bymemorywrite program 107 via memory card interface 106.

ROM (Read Only Memory) 2514 stores terminal identifier 2515 which is comprised of a predetermined character sequence (such as a telephone number) unique to cellular phone 2501 and used in encrypting content 2512.

Encryption/decryption program 2509 encrypts content 2512 using terminal identifier 2515 stored in ROM (Read Only Memory) 2514. Further, when storing content 2512 (encrypted content 2505) encrypted in memory card 2502, encryption/decryption program 2509 generates directory 2503 as a storage destination, and stores encrypted content 2505 in the directory 2503. Further, directory name 2513 of the directory 2503 generated by cellular phone 2501 is also stored in RAM 2511 of cellular phone 2501.

By this means, among encrypted content written in memory card 2502, encrypted content 2502 written by cellular phone 2501 can be distinguished in cellular phone 2501 using directory name 2513.

When encrypted content 2505 stored in the predetermined directory, 2503, in memory card 2502 is read into cellular phone 2501, memory read program 108 of cellular phone 2501 judges whether or not memory card 2502 has a directory with a directory name in agreement with directory name 2513 stored in RAM 2511 of cellular phone 2501, prior to the processing for reading encrypted content 2505, and when the directory with directory name 2513 exists, adds the directory to the list information. It is determined that encrypted content 2505 of the directory described in the list was written in memory card 2502 by cellular phone 2501.

Thus, when it is recognized that directory 2503 set in memory card 2502 is obtained by cellular phone 2501 setting in memory card 2502, encryption/decryption program 2509 decodes encrypted content 2505 stored in directory 2503 with directory name 2513, and stores the decoded content 2512 in RAM 2511.

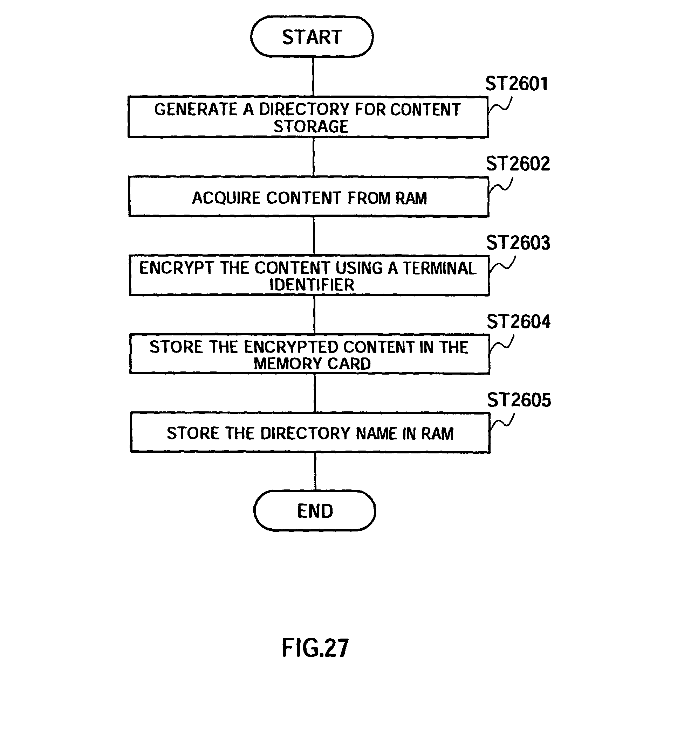

FIG.27 is a flowchart illustrating processing procedures of encryption/decryption program 2509 in storing in memory card 2502 content 2512 stored in RAM 2511 of cellular phone 2501.

As shown in FIG.27, in step ST2601, encryption/decryption program 2509 generates directory 2503 to store content, shifts to a subsequent step, ST2602, and acquires content 2512 from RAM 2511. Then, encryption/decryption program 2509 shifts to step ST2603, and encrypts the content 2512 acquired in step ST2602, for example, in the triple DES (Data encryption Standard) encryption scheme, using terminal identifier 2515 in ROM 2514.

Encryption/decryption program 2509 shifts to step ST2604, and stores encrypted content 2505 encrypted in step ST2503 in directory 2503 in memory card 2502 generated in step ST2601.

In step ST2605, encryption/decryption program 2509 stores directory name 2513 of directory 2503, which is generated in step ST2601 to store encrypted content 2505, in RAM 2511 of cellular phone 2501.

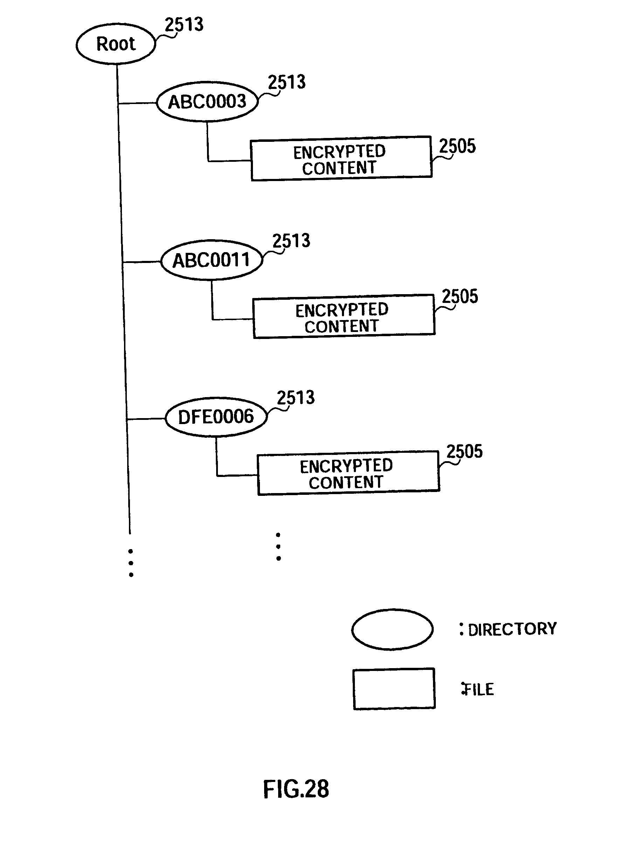

In this way, as shown in FIG.28, in memory card 2502, encrypted content 2505 is stored in directory 2503 with the same directory name as directory name 2513 stored in RAM 2511 of cellular phone 2501.

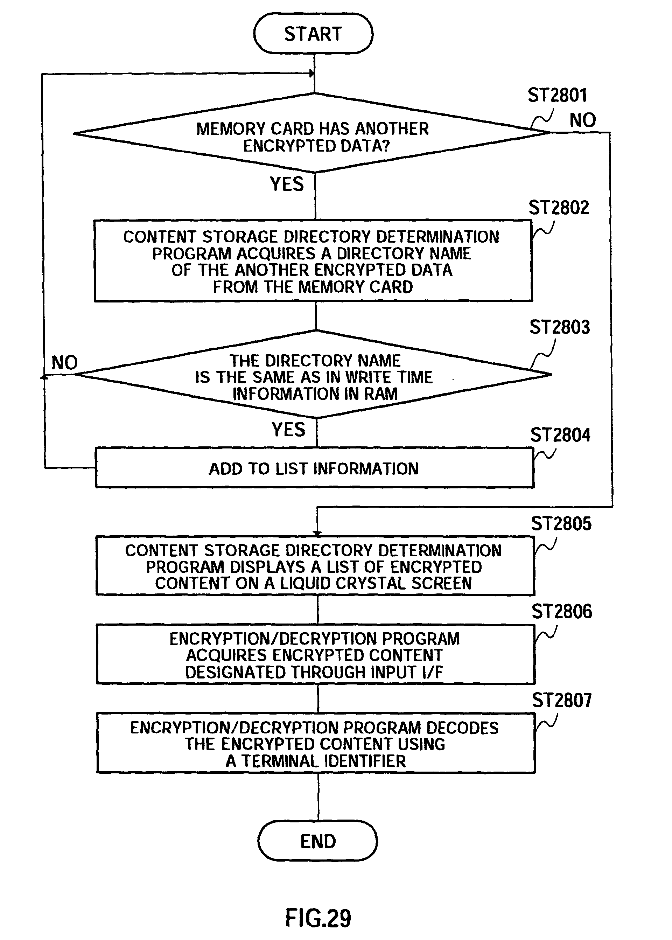

FIG.29 is a flowchart illustrating processing procedures of encryption/decryption program 2509 and content storage directory determination program 2510 when cellular phone 2501 reads and decodes encrypted content 2505 stored in memory card 2502 in the processing procedures in FIG.27.

As shown in FIG.29, in step ST2801, content storage directory determination program 2510 checks whether or not encrypted content is present in memory card 2502. The positive result obtained in this step means a possibility that encrypted content written in memory card 2502 by cellular phone 2501 i.e. encrypted content 2505 available for cellular phone 2501 is stored in memory card 2502, and at this point, content storage directory determination program 2510 shifts to step ST2802, and acquires the directory name storing the encrypted content.

Then, content storage directory determination program 2510 shifts to step ST2803, and judges whether or not the directory name acquired in step ST2802 is the same as directory name 2513 stored in RAM 2511 of cellular phone 2501.

The negative result obtained in this step means that the acquired directory name is not generated nor set in memory card 2502 by cellular phone 2501 i.e. the encrypted content stored in the directory with the directory name is not written in memory card 2502 by cellular phone 2501. At this point, content storage directory determination program 2510 returns to step ST2801, judges whether or not another encrypted content is stored in memory card 2502, and based on a result of judgment, executes the same processing as described above.

In contrast thereto, the positive result obtained in step ST2803 means that the acquired directory name is generated and set in memory card 2502 by cellular phone 2501, i.e. encrypted content 21505 stored in directory 2503 with directory name 2513 was written in memory card 2502 by cellular phone 2501. At this point, content storage directory determination program 2510 shifts to step ST2804, adds the directory name 2513 to the list information, returns to step ST2801, judges whether or not another encrypted content is stored in memory card 2502, and based on a result of judgment, executes the same processing as described above.

When the judgment of whether or not encrypted content is written by cellular phone 2501 is made on all the encrypted content (directory names) stored in memory card 2502, content storage directory determination program 2510 obtains the negative result in step ST2801, shifts to step ST2805, and displays in list form on liquid crystal screen 116 the information (such as a directory name) related to encrypted content 2505 specified by the list information generated in step ST2804.

In this way, liquid crystal screen 116 displays in list form the information related to encrypted content 2505 available in cellular phone 2501 among encrypted content stored in memory card 2502.

In addition, as a constitution for displaying in list form the information related to encrypted content 2505 available in cellular phone 2501, for example, a method is considered of storing only limited information such as a title corresponding to the encrypted content 2505 in RAM 2511 of cellular phone 2501 in storing the encrypted content 2505 in memory card 2502, and displaying in list form the stored limited information based on the result of agreement in step ST2803.

In step ST2805, when a list of content is displayed on liquid crystal screen 116, a user operates input interface 117, and thereby selects desired content from the displayed list.

By this means, encryption/decryption program 2509 shifts to step ST2806, reads encrypted content 2505 designated via input interface 117 from memory card 2502 using memory read program 108, shifts to a subsequent step, ST2807, and decodes the encrypted content 2505 acquired from memory card 2502 in step ST2806, using terminal identifier 2515 stored in ROM 2514, to store in RAM 2511.

Content 2512 stored in RAM 2511 is initiated by the user of cellular phone 2501 operating input interface 117, and used by the user.

In the aforementioned constitution, when writing encrypted content 2505 in memory card 2502, cellular phone 2501 stores in RAM 2513 directory name 2513 of directory 2502 to store the content in memory card 2502. In this way, in cellular phone 2501, directory name 2513 of directory 2503 is set in the environment of cellular phone 2501. The directory 2503 stores encrypted content 2505 only available in cellular phone 2501.

Encrypted content 2505 is thus stored in directory 2503 with the set directory name 2513 in memory card 2502. In this way, directory name 2513 becomes available as information for identifying a use environment (content-available cellular phone 2501) of the encrypted content 2505.

Thus, directory name 2513 in writing encrypted content 2505 in memory card 2502 is stored in both cellular phone 2501 and memory card 2502 as a keyword indicating the fact that cellular phone 2501 wrote the encrypted content 2505 in memory card 2502.

Accordingly, when memory card 2502 inserted into cellular phone 2501 has the same directory name as directory name 2513 stored in cellular phone 2501, it is meant that encrypted content 2505 stored in directory 2503 with directory name 2513 was written by cellular phone 2501 i.e. is content available in cellular phone 2501.

Accordingly, when the directory name of memory card 2502 agrees with directory name 2513 stored in cellular phone 2501, it is possible to read into cellular phone 2501 encrypted content 2505 stored in directory 2503 with directory name 2513 in memory card 2502 to be used in cellularphone 2501. In response to a result of agreement, encryption/decryption program 2509 of cellular phone 2501 reads the encrypted content 2505 from memory card 2502, and decodes the read encrypted content 2505.

Thus, on the condition that the directory name of memory card 2502 is in agreement with directory name 2513 stored in RAM 2511, encrypted content 2505 stored in directory 2503 with directory name 2513 in memory card 2502 is read into cellular phone 2501 from memory card 2502 to be decoded, whereby cellular phone 2501 is capable of selecting only encrypted content 2505 available in cellular phone 2501, based on directory name 2513 with a small data amount.

Accordingly, when a plurality of pieces of encrypted content is stored in memory card 2502 and terminal apparatuses (such as cellular telephones) capable of using the plurality of encrypted content vary with each encrypted content, cellular phone 2501 does not need to decode all the plurality of encrypted content with a large data amount, and only by acquiring directory name 2513 with a small data amount associated with each of the plurality of encrypted content, is capable of determining available encrypted content 2505.

In this way, according to cellular phone 2501 as a content processing apparatus in this Embodiment, it is possible to more readily distinguish between a plurality of pieces of encrypted content stored in memory card 2502 that is a content storage medium, and more promptly decode encrypted content 2505 available in cellular phone 2501.

In addition, this Embodiment describes the case of automatically generating directory name 2513 in cellular phone 2501 in writing encrypted content 2505 in memory card 2502 as information for distinguishing the encrypted content 2505, but the present invention is not limited to such a case. It may be possible to use set information input by a user operating input interface 117 or a value randomly set by cellular phone 2501 using random numbers. Further, thus generated directory name 2513 including directory name 2513 in this Embodiment may be encrypted and set as a directory name in memory card 2501. By this means, even when a directory name generated by cellular phone 2501 to distinguish between encrypted content 2505 is known to a third party from memory card 2502, it is possible to prevent encrypted content 2505 from being decoded improperly.

Moreover, this Embodiment describes the case where a telephone number of cellular phone 2501 is used as terminal identifier 2515 in cellular phone 2501, but the present invention is not limited to such a case. For example, it may be possible to use an identifier for identifying cellular telephone 2501 such as a serial number of cellular telephone 2501, data such as a character sequence with some meaning, numeric value, image and audio, or an identifier (such as a membership number) indicating a contract with particular service. Further, as well as using as terminal identifier 2515 a telephone number, serial number or other information such as a character sequence without any processing, such a terminal identifier may be converted to be used (as information related to the terminal identifier). By this means, when an encryption method in encrypting content and identification data using the terminal identifier and/or the terminal identifier leaks to a third party, since the terminal identifier is converted into another data usable as an encryption key, it is possible to prevent interpretation of the encrypted content and encrypted identification data that is encrypted using the data (encryption key).

Further, this Embodiment describes the case of storing directory name 2513 of memory card 2502 in RAM 2511 of cellular phone 2501 and distinguishing encrypted content 2505 available for cellular phone 2501 using the directory name 2513, but the present invention is not limited to such a case. For example, it may be possible to share a card identifier unique to memory card 2502 between RAM 2511 of cellular phone 2501 and memory card 2502, and distinguish available encrypted content 2505 by the card identifier and directory name 2513. In this way, it is possible to cope with the case of using a plurality of memory cards corresponding to types (such as audio and game) of content. Furthermore, by this means, with respect to different memory cards having a same directory name, it is possible to determine whether each encrypted content stored in the memory cards is available or not.

Moreover, this Embodiment describes the case of using memory card 2502 as a content storage medium to store content, but the present invention is not limited to such a case. As long as a device is a content storage medium capable of storing digitalized information, other devices are widely applied.

### (Embodiment 8)

In aforementioned Embodiments 1 to 7, the case is described that a single cellular phone distinguishes available content from a plurality of pieces of encrypted content stored in a memory card by the phone. However, the present invention is not limited to such a case, and applicable to a case where a single memory card is inserted into different cellular phones and the plurality of cellular phones use the memory card.

In this case, as a terminal identifier stored in ROM of cellular phones, a common terminal identifier is stored in a plurality of cellular phones sharing a single memory card. By this means, a plurality of cellular phones can be set for environments providing a specific identifier, and a single memory card can be used in environments including a plurality of cellular phones.

As described above, according to the present invention, with respect to encrypted content stored in a content storage medium, by storing information with a small data amount related to the encrypted content in association with the encrypted content in the content storage medium, it is possible to readily distinguish between the encrypted content based on the related information without decoding the encrypted content with a large data amount.

Further, according to the present invention, it is made possible to determine whether content stored in a content storage medium is available or not, and it is thus possible to prevent inconvenience of playing back unauthorized data erroneously.

In an information management system where digitized information of content is managed as a file on a detachable content storage medium and use of the digital information is allowed only in an environment providing a specific identifier, a content processing apparatus of the present invention for writing the digital information into the content storage medium has a configuration provided with a data encrypting section that encrypts identification data using the identifier or information related to the identifier as a key for encryption, and an encrypted data storage section that stores the encrypted identification data in the content storage medium in association with the file of the digital information.

In the content processing apparatus of the above configuration, the encrypted data storage section stores the encrypted identification data in an authentication file system, which functions as a storage destination for the encrypted identification data on the content storage medium and which is accessible only when authentication succeeds between the detachable content storage medium and the environment providing having the specific identifier, and associates the file of the digital information with the identification data stored in the authentication file system.

According to this constitution, it is possible to distinguish encrypted content only when the authentication area is accessible on the content storage medium.

In an information management system where digitized information of content is managed as a file on a detachable content storage medium and use of the digital information is allowed only in an environment providing a specific identifier, a content processing apparatus of the present invention for writing the digital information into the content storage medium has a configuration provided with an identifier storage section that associates the identifier with the file of the digital information to store in the content storage medium.

In the content processing apparatus of the above configuration, the identifier storage section stores the encrypted identification data in an authentication file system, which functions as a storage destination for the encrypted identification data on the content storage medium and which is accessible only when authentication succeeds between the detachable content storage medium and the environment providing the specific identifier, and associates the file of the digital information with the identifier stored in the authentication file system.

In an information management systemwhere digitized information of content is managed as a file on a detachable content storage medium and use of the digital information is allowed only in an environment providing a specific identifier, a content processing apparatus of the present invention for writing the digital information into the content storage medium has a configuration provided with an identifier encrypting section that encrypts the identifier using specific encrypting means, and an encrypted identifier storage section that stores the encrypted identifier in the content storage medium in association with the file of the digital information.

In the content processing apparatus of the above configuration, the encrypted identifier storage section stores the encrypted identification data in an authentication file system, which functions as a storage destination for the encrypted identification data on the content storage medium and which is accessible only when authentication succeeds between the detachable content storage medium and the environment providing the specific identifier, and associates the file of the digital information with the encrypted identifier stored in the authentication file system.

A content processing apparatus of the present invention has a constitution in the aforementioned configuration further provided with an identifier conversion section that converts the identifier corresponding to a specific conversion expression, where the identifier encrypting section encrypts the identifier converted in the identifier conversion section, and the encrypted identifier storage section stores the encrypted identifier in the content storage medium.

In an information management system where digitized information of content is managed as a file on a detachable content storage medium and use of the digital information is allowed only in an environment providing a specific identifier, a content processing apparatus of the present invention for writing the digital information into the content storage medium has a configuration provided with a unique data storage section that stores identification data in the content storage medium in association with the file of the digital information, and the identification data is different from the identifier and unique to the environment providing the specific identifier.

A content processing apparatus of the present invention has a constitution in the aforementioned configuration where the unique data storage section stores the identification data in the content storage medium in an authentication file system accessible only when authentication succeeds between the detachable content storage medium and the environment having the specific identifier, while associating the file of the digital information with the identification data stored in the authentication file system.

In an information management system where digitized information of content is managed as a file on a detachable content storage medium and use of the digital information is allowed only in a specific environment, a content processing apparatus of the present invention for writing the digital information into the content storage medium has a configuration provided with a write time specification section that specifies the time the digital information was written in the content storage medium, and a write time storage section that stores the specified time in an environment of the apparatus to write data, while associating the write time with the file of the digital information to store in the content storage medium.

In the content processing apparatus of the above configuration, the write time storage section stores the encrypted identification data in an authentication file system, which functions as a storage destination for the encrypted identification data on the content storage medium and which is accessible only when authentication succeeds between the detachable content storage medium and the environment providing the specific identifier, and associates the file of the digital information with the write time stored in the authentication file system.

In the content processing apparatus of the above configuration, the information management system allows use of the digital information only in the environment providing a specific identifier, the content processing apparatus is further provided with a write time encrypting section that encrypts the write time using information related to the identifier, and in the write time storage section, at least write time stored in the content storage medium is encrypted by the write time encrypting section.

A content processing apparatus of the present invention has a constitution in the aforementioned constitution further provided with a write time conversion section that converts the write time using information related to the identifier, where the write time encrypting section encrypts the converted write time using a specific method.

In an information management system where digitized information of content is managed as a file on a detachable content storage medium and use of the digital information is allowed only in a specific environment, a content processing apparatus of the present invention for writing the digital information into the content storage medium a user designated value write section that sets the environment for a user designated value that is a value or a name designated by a user, and a user designated value storage section that stores the user designated value in the content storage medium.

A content processing apparatus of the present invention further has in the aforementioned configuration an initial value set section that randomly sets an initial value to be used as the user designated value in a state that the user does not designate the user designated value.

A content processing apparatus of the present invention has a constitution in the aforementioned constitution where the information management system allows use of the digital information only in the environment providing a specific identifier, the content processing apparatus further has a user designated value encrypting section that encrypts the user designated value using information related to the identifier, and in the user designated value storage section, the user designated value stored in the content storage medium is encrypted by the user designated value encrypting section.

In an information management system where digitized information of content is managed as a file on a detachable content storage medium and use of the digital information is allowed only in a specific environment, a content processing apparatus of the present invention for writing the digital information into the content storage medium has a configuration provided with a write identification data generating section that generates identification data in writing the digital information in the content storage medium, and a write identification data storage section that stores the identification data in an environment of the apparatus to write the data, and associates the identification data with the file of the digital information to store in the content storage medium.

A content processing apparatus of the present invention has a constitution in the aforementioned configuration where the write identification data generating section generates the identification data randomly in write or using specific procedures.

In an information management systemwhere digitized information of content is managed as a file on a detachable content storage medium and use of the digital information is allowed only in a specific environment, a content processing apparatus of the present invention for writing the digital information into the content storage medium has a configuration provided with a write portion specification section that specifies a write portion in writing the digital information in the content storage medium, and a write portion storage section that stores the specified portion in an environment of the apparatus to write data.

A content processing apparatus of the present invention has a constitution in the aforementioned configuration where the digital information is encrypted using information related to the identifier.

A content processing apparatus of the present invention has a constitution in the aforementioned configuration where the identification data is data such as a character sequence having some meaning, numeric value, image and audio.

A content processing apparatus of the present invention has a constitution in the aforementioned configuration where the identifier is data such as a character sequence having some meaning, numeric value, image and audio.

A content processing apparatus of the present invention has a constitution in the above-mentioned constitution where the specific environment or the environment having the specific identifier is a specific device to which the detachable content storage medium is detachable.

A content processing apparatus of the present invention has a constitution in the above-mentioned constitution where the specific environment or the environment having the specific identifier is an environment specified by an identifier indicative of a contract with specific service.

According to the above-mentioned constitutions, it is possible to more readily distinguish between a plurality of pieces of encrypted content stored in the content storage medium, based on the information associated with the encrypted content. Further, it is made possible to determine whether content stored in the content storage medium is available or not, and it is thus possible to prevent inconvenience of playing back unauthorized data erroneously.

In an information management system where digitized information of content is managed as a file on a detachable content storage medium and use of the digital information is allowed only in an environment providing a specific identifier, a content processing apparatus of the present invention for reading the digital information from the content storage medium has a configuration provided with an encrypted data read section that reads encrypted data stored in association with the file of the digital information in the content storage medium, and an encrypted data determining section which decodes the read encrypted data using information related to the identifier of an environment of the apparatus, and determines whether the decoded data agrees with identification data.

A content processing apparatus of the present invention has a constitution in the aforementioned configuration where the encrypted data read section reads the encrypted identification data from an authentication file system on the content storage medium accessible only when authentication succeeds between the detachable content storage medium and the environment having the specific identifier.

In an information management system where digitized information of content is managed as a file on a detachable content storage medium and use of the digital information is allowed only in an environment providing a specific identifier, a content processing apparatus of the present invention for reading the digital information from the content storage medium has a configuration provided with an identifier determining section which reads the identifier stored in association with the file of the digital information stored in the content storage medium, and determines whether the identifier agrees with an identifier of an environment of the apparatus.

A content processing apparatus of the present invention has a constitution in the aforementioned configuration where the identifier determining section reads the identifier from an authentication file system on the content storage medium accessible only when authentication succeeds between the detachable content storage medium and the environment providing the specific identifier.

In an information management system where digitized 0 information of content is managed as a file on a detachable content storage medium and use of the digital information is allowed only in an environment providing a specific identifier, a content processing apparatus of the present invention for reading the digital information from the 5 content storage medium has a configuration provided with an encrypted identifier read section that reads encrypted identifier stored in association with the file of the digital information stored in the content storage medium, and an encrypted identifier determining section which 0 decodes the read encrypted identifier in specific decoding means of an environment of the apparatus, and determines whether the decoded data agrees with the identifier of the apparatus.

A content processing apparatus of the present invention has a constitution in the aforementioned configuration wheretheencryptedidentifier read section reads the encrypted identifier from an authentication file system on the content storage medium accessible only when authentication succeeds between the detachable content storage medium and the environment providing the specific identifier.

A content processing apparatus of the present invention has a constitution in the above-mentioned configuration further provided with an identifier inverse-conversion section that converts the encrypted identifier corresponding to a specific conversion expression, where the encrypted identifier determining section performs inverse-conversion on the decoded encrypted identifier in the identifier inverse-conversion section to determine whether the decoded identifier agrees with the identifier of the apparatus.

In an information management system where digitized information of content is managed as a file on a detachable content storage medium and use of the digital information is allowed only in an environment providing a specific identifier, a content processing apparatus of the present invention for reading the digital information from the content storage medium has a configuration provided with a unique data read section that reads unique data stored in association with the file of the digital information stored in the content storage medium, and a unique data determining section which determines whether the read unique data agrees with unique data of an environment of the apparatus.

A content processing apparatus of the present invention has a constitution in the aforementioned configuration where the unique data read section reads the unique data from an authentication file system on the content storage medium accessible only when authentication succeeds between the detachable content storage medium and the environment providing the specific identifier.

In an information management system where digitized information of content is managed as a file on a detachable content storage medium and use of the digital information is allowed only in an environment providing a specific identifier, a content processing apparatus of the present invention for reading the digital information from the content storage medium has a configuration provided with a write time read section that reads write time of the digital information stored in the content storage medium in association with the file of the digital information, and a write time determining section that determines whether or not the read write time agrees with one of write times stored in an environment of the apparatus.

A content processing apparatus of the present invention has a constitution in the aforementioned configuration where the write time read section reads the write time from an authentication file system on the content storage medium accessible only when authentication succeeds between the detachable content storage medium and the environment providing the specific identifier.

A content processing apparatus of the present invention has a constitution in the aforementioned constitution where the information management system allows use of the digital information only in an environment providing a specific identifier, the write time determining section decodes the write time read in the write time read section, using information related to the identifier of an environment of the apparatus, and determines whether or not the decoded write time agrees with one of write times stored in the environment of the apparatus.

A content processing apparatus of the present invention has in the aforementioned constitution a constitution further provided with a write time conversion section that converts the write time read in the write time read section using the information related to the identifier, where the write time determining section decodes the converted write time using a specific method, and determines whether or not the decoded write time agrees with one of write times stored in the environment of the apparatus.

In an information management system where digitized information of content is managed as a file on a detachable content storage medium and use of the digital information is allowed only in a specific environment, a content processing apparatus of the present invention for reading the digital information from the content storage medium has a configuration provided with a user designated value read section that reads a user designated value that is designated by a user and stored in the content storage medium in association with the file of the digital information, and a user designated value determining section that determines whether or not the read user designated value agrees with a user designated value stored in an environment of the apparatus.

A content processing apparatus of the present invention has a constitution in the aforementioned constitution where the information management system allows use of the digital information only in an environment providing a specific identifier, the user designated value determining section decodes the user designated value read in the user designated value read section, using information related to the identifier of the environment of the apparatus, and determines whether or not the decoded value agrees with the user designated value stored in the environment of the apparatus.

In an information management system where digitized information of content is managed as a file on a detachable content storage medium and use of the digital information is allowed only in a specific environment, a content processing apparatus of the present invention for reading the digital information from the content storage medium has a configuration provided with a write identification data read section that reads identification data stored in the content storage medium in association with the file of the digital information, and a write identification data determining section that determines whether or not the read identification data agrees with one of identification data stored in an environment of the apparatus.

In an information management system where digitized information of content is managed as a file on a detachable content storage medium and use of the digital information is allowed only in a specific environment, a content processing apparatus of the present invention for reading the digital information from the content storage medium has a configuration provided with a write portion read section that reads a write portion that is a storage location of the file of the digital information and stored in the content storage medium from the content storage medium, and a write portion determining section that determines whether or not the read write portion agrees with one of write portions stored in an environment of the apparatus.

A content processing apparatus of the present invention has a constitution in the above-mentioned constitution where the specific environment or the environment providing the specific identifier is a specific device to which the detachable content storage medium is detachable.

A content processing apparatus of the present invention has a constitution in the above-mentioned constitution where the specific environment or the environment providing the specific identifier is an environment specified by an identifier indicative of a contract with specific service.

According to the above-mentioned constitutions, before reading and decoding encrypted content stored in the content storage medium, the encrypted content is distinguished based on the information associated with the encrypted content, whereby it is possible to distinguish the information of the content readily without decoding the encrypted content. Further, it is made possible to determine whether content stored in the content storage medium is available or not, and it is thus possible to prevent inconvenience of playing back unauthorized data erroneously.

In an information management system where digitized information of content is managed as a file on a detachable content storage medium and use of the digital information is allowed only in an environment providing a specific identifier, a content storage medium of the present invention has a constitution whereby identification data encrypted using the identifier or information related to the identifier as an encryption key is stored in association with the file of the digital information.

A content storage medium of the present invention has a constitution where the content storage medium in the aforementioned constitution is further provided with an authentication file system accessible only when authentication succeeds between the detachable content storage medium and the environment providing the specific identifier, and the encrypted identification data is stored in the authentication file system, while the association is recorded between the file of the digital information and the identification data stored in the authentication file system.

In an information management system where digitized information of content is managed as a file on a detachable content storage medium and use of the digital information is allowed only in an environment providing a specific identifier, a content storage medium of the present invention has a constitution whereby the identifier is stored in association with the file of the digital information.

A content storage medium of the present invention has a constitution where the content storage medium in the aforementioned constitution is further provided with an authentication file system accessible only when authentication succeeds between the detachable content storage medium and the environment providing the specific identifier, and the identifier is stored in the authentication file system, while the association is recorded between the file of the digital information and the identifier stored in the authentication file system.

In an information management system where digitized information of content is managed as a file on a detachable content storage medium and use of the digital information is allowed only in an environment providing a specific identifier, a content storage medium of the present invention has a constitution whereby the identifier encrypted using specific encrypting means is stored in association with the file of the digital information.

A content storage medium of the present invention has a constitution where the content storage medium in the aforementioned constitution is further provided with an authentication file system accessible only when authentication succeeds between the detachable content storage medium and the environment providing the specific identifier, and the encrypted identifier is stored in the authentication file system, while the association is recorded between the file of the digital information and the encrypted identifier stored in the authentication file system.

A content storage medium of the present invention has a constitution in the aforementioned constitution where the identifier is converted corresponding to a specific conversion expression and then encrypted using the specific encrypting means.

In an information management system where digitized information of content is managed as a file on a detachable content storage medium and use of the digital information is allowed only in an environment providing a specific identifier, a content storage medium of the present invention has a constitution whereby identification data, which is different from the identifier and unique to the environment providing the specific identifier, is stored in association with the file of the digital information.

A content storage medium of the present invention has a constitution where the content storage medium in the aforementioned constitution is further provided with an authentication file system accessible only when authentication succeeds between the detachable content storage medium and the environment providing the specific identifier, and the unique identification data is stored in the authentication file system, while the association is recorded between the file of the digital information and the unique identification data stored in the authentication file system.

In an information management system where digitized information of content is managed as a file on a detachable content storage medium and use of the digital information is allowed only in a specific environment, a content storage medium of thepresent invention has a constitution whereby write time that specifies the time the digital information was written is stored in association with the file of the digital information.

A content storage medium of the present invention has a constitution where the content storage medium in the aforementioned constitution is further provided with an authentication file system accessible only when authentication succeeds between the detachable content storage medium and the specific environment, and the write time is stored in the authentication file system, while the association is recorded between the file of the digital information and the write time stored in the authentication file system.

A content storage medium of the present invention has a constitution in the aforementioned constitution where the information management system allows use of the digital information only in an environment providing a specific identifier, and the write time is encrypted using information related to the identifier and stored.

A content storage medium of the present invention has a constitution in the aforementioned constitution where the write time is converted using the information related to the identifier and then encrypted using a specific method.

In an information management systemwhere digitized information of content is managed as a file on a detachable content storage medium and use of the digital information is allowed only in a specific environment, a content storage medium of the present invention has a constitution whereby a user designated value that is a value or a name for a user to designate to the environment is stored in association with the file of the digital information.

A content storage medium of the present invention has a constitution in the aforementioned constitution where as the user designated value, a random value is stored as an initial value in a state the user does not designate the user designated value.

A content storage medium of the present invention has a constitution in the aforementioned constitution where the information management system allows use of the digital information only in an environment having a specific identifier, and the user designated value is encrypted using information related to the identifier and stored.

In an information management systemwhere digitized information of content is managed as a file on a detachable content storage medium and use of the digital information is allowed only in a specific environment, a content storage medium of the present invention has a constitution whereby identification data generated in writing the digital information is stored in association with the file of the digital information.

A content storage medium of the present invention has a constitution in the aforementioned constitution where the identification data is generated randomly in write or by specific procedures.

A content storage medium of the present invention has a constitution in the aforementioned constitution where the digital information is encrypted using information related to the identifier.

A content storage medium of the present invention has a constitution in the aforementioned constitution where the identification data is data such as a character sequence having some meaning, numeric value, image and audio.

A content storage medium of the present invention has a constitution in the aforementioned constitution where the identifier is data such as a character sequence having some meaning, numeric value, image and audio.

A content storage medium of the present invention has a constitution in the aforementioned constitution where the identifier is data indicative of a contract with specific service.

According to the above-mentioned constitutions, information related to encrypted content is stored in the content storage medium, and it is thereby possible to further readily distinguish encrypted content based on the information. Further, by using the information, a use environment such as a terminal apparatus is capable of determining whether content stored in the content storage medium is available or not, and it is thus possible to prevent inconvenience such that the use environment plays back unauthorized data erroneously.

In an information management system where digitized information of content is managed as a file on a detachable content storage medium and use of the digital information is allowed only in an environment providing a specific identifier, a content processing method of the present invention for writing the digital information in the content storage medium has a data encrypting step of encrypting identification data using information related to the identifier as a key for encryption, and an encrypted data storage step of storing the encrypted identification data in the content storage medium in association with the file of the digital information.

In a content processing method of the present invention in the aforementioned method, in the encrypted data storage step, the encrypted identification data is stored in the content storage medium in an authentication file system, which functions as a storage destination for the encrypted identification data on the content storage medium and which is accessible only when authentication succeeds between the detachable content storage medium and the environment providing the specific identifier, while the file of the digital information is associated with the identification data stored in the authentication file system.

In an information management system where digitized information of content is managed as a file on a detachable content storage medium and use of the digital information is allowed only in an environment providing a specific identifier, a content processing method of the present invention for writing the digital information in the content storage medium has an identifier storage step of associating the identifier with the file of the digital information to store in the content storage medium.

In a content processing method of the present invention in the aforementionedmethod, in the identifier storage step, the identifier in the content storage medium is stored in an authentication file system, which functions as a storage destination for the encrypted identification data on the content storage medium and which is accessible only when authentication succeeds between the detachable content storage medium and the environment providing the specific identifier, while the file of the digital information is associated with the identifier stored in the authentication file system.

In an information management systemwhere digitized information of content is managed as a file on a detachable content storage medium and use of the digital information is allowed only in an environment providing a specific identifier, a content processing method of the present invention for writing the digital information in the content storage medium has an identifier encrypting step of encrypting the identifier using specific encrypting means, and an encrypted identifier storage step of storing the encrypted identifier in the content storage medium in association with the file of the digital information.

In a content processing method of the present invention in the aforementioned method, in the encrypted identifier storage step, the encrypted identifier in the content storage medium is stored in an authentication file system file system, which functions as a storage destination for the encrypted identification data on the content storage medium and which is accessible only when authentication succeeds between the detachable content storage medium and the environment providing the specific identifier, while the file of the digital information is associated with the encrypted identifier stored in the authentication file system.

A content processing method of the present invention further has in the aforementioned method an identifier conversion step of converting the identifier corresponding to a specific conversion expression, where in the identifier encrypting step, the identifier converted in the identifier conversion step is encrypted, and in the encrypted identifier storage step, the encrypted identifier is stored in the content storage medium.

In an information management system where digitized information of content is managed as a file on a detachable content storage medium and use of the digital information is allowed only in an environment providing a specific identifier, a content processing method of the present invention for writing the digital information in the content storage medium has a unique data storage step of storing identification data in the content storage medium in association with the file of the digital information, and the identification data is different from the identifier and unique to the environment providing the specific identifier.

In a content processing method of the present invention in the aforementioned method, in the unique data storage step, the identification data in the content storage medium is stored in an authentication file system, which functions as a storage destination for the encrypted identification data on the content storage medium and which is accessible only when authentication succeeds between the detachable content storage medium and the environment providing the specific identifier, while the file of the digital information is associated with the identification data stored in the authentication file system.

In an information management systemwhere digitized information of content is managed as a file on a detachable content storage medium and use of the digital information is allowed only in a specific environment, a content processing method of the present invention for writing the digital information in the content storage medium has a write time specification step of specifying the time the digital information was written in the content storage medium, and a write time storage step of storing the specified time in an environment of the method to write data, while associating the write time with the file of the digital information to store in the content storage medium.

In a content processing method of the present invention in the aforementioned method, in the write time storage step, the write time in the content storage medium is stored in an authentication file system, which functions as a storage destination for the encrypted identification data on the content storage medium and which is accessible only when authentication succeeds between the detachable content storage medium and the environment providing the specific identifier, while the file of the digital information is associated with the write time stored in the authentication file system.

In a content processing method of the present invention in the aforementioned method, the information management system allows use of the digital information only in the environment providing a specific identifier, the content processing method is further has a write time encrypting step of encrypting the write time using information related to the identifier, and in the write time storage step, at least write time stored in the content storage medium is encrypted in the write time encrypting step.

A content processing method of the present invention further has in the aforementioned method a write time conversion step of converting the write time using information related to the identifier, and in the write time encrypting step, the converted write time is encrypted using a specific method.

In an information management system where digitized information of content is managed as a file on a detachable content storage medium and use of the digital information is allowed only in a specific environment, a content processing method of the present invention for writing the digital information in the content storage medium has a user designated value write step of setting the environment for a user designated value that is a value or a name designated by a user, and a user designated value storage step of storing the user designated value in the content storage medium.

A content processing method of the present invention further has in the aforementioned method an initial value set step of randomly setting an initial value to be used as the user designated value in a state that the user does not designate the user designated value.

In a content processing method of the present invention in the aforementioned method, the information management system allows use of the digital information only in the environment providing a specific identifier, the content processing method further has a user designated value encrypting step of encrypting the user designated value using information related to the identifier, and in the user designated value storage step, the user designated value stored in the content storage medium is encrypted in the user designated value encrypting step.

In an information managementsystem wheredigitized information of content is managed as a file on a detachable content storage medium and use of the digital information is allowed only in a specific environment, a content processing method of the present invention for writing the digital information in the content storage medium has a write identification data generating step of generating identification data in writing the digital information in the content storage medium, and a write identification data storage step of storing the identification data in an environment of the method to write data, while associating the identification data with the file of the digital information to store in the content storage medium.

In a content processing method of the present invention in the aforementioned method, in the write identification data generating step, the identification data is generated randomly in write or using specific procedures.

In an information management system where digitized information of content is managed as a file on a detachable content storage medium and use of the digital information is allowed only in a specific environment, a content processing method of the present invention for writing the digital information in the content storage medium has a write portion specification step of specifying a write portion in writing the digital information in the content storage medium, and a write portion storage step of storing the specified portion in an environment of the method to write data.

In a content processing method of the present invention, in the aforementioned method the digital information is encrypted using information related to the identifier.

In a content processing method of the present invention, in the above-mentioned method the identification data is data such as a character sequence having some meaning, numeric value, image and audio.

In a content processing method of the present invention, in the above-mentioned method the identifier is data such as a character sequence having some meaning, numeric value, image and audio.

In a content processing method of the present invention, in the above-mentioned method the specific environment or the environment providing the specific identifier is a specific device to which the detachable content storage medium is detachable.

In a content processing method of the present invention, in the above-mentioned method the specific environment or the environment providing the specific identifier is an environment specified by an identifier indicative of a contract with specific service.

According to the above-mentioned methods, it is possible to more readily distinguish between a plurality of pieces of encrypted content stored in the content storage medium, based on the information associated with the encrypted content. Further, it is made possible to determine whether content stored in the content storage medium is available or not, and it is thus possible to prevent inconvenience of playing back unauthorized data erroneously.

In an information management system where digitized information of content is managed as a file on a detachable content storage medium and use of the digital information is allowed only in an environment providing a specific identifier, a content processing method of the present invention for reading the digital information from the content storage medium has an encrypted data read step of reading encrypted data stored in association with the file of the digital information in the content storage medium, and an encrypted data determining step of decoding the read encrypted data using information related to the identifier of an environment of the method, and determining whether the decoded data agrees with identification data.

In a content processing method of the present invention in the aforementioned method, in the encrypted data read step, the encrypted identification data is read from an authentication file system on the content storage medium accessible only when authentication succeeds between the detachable content storage medium and the environment providing the specific identifier.

In an information management system where digitized information of content is managed as a file on a detachable content storage medium and use of the digital information is allowed only in an environment providing a specific identifier, a content processing method of the present invention for reading the digital information from the content storage medium has an identifier determining step of reading the identifier stored in association with the file of the digital information stored in the content storage medium, and determining whether the identifier agrees with an identifier of an environment of the method.

In a content processing method of the present invention in the aforementionedmethod, in the identifier determining step, the identifier is read from an authentication file system on the content storage medium accessible only when authentication succeeds between the detachable content storage medium and the environment providing the specific identifier.

In an information management systemwhere digitized information of content is managed as a file on a detachable content storage medium and use of the digital information is allowed only in an environment providing a specific identifier, a content processing method of the present invention for reading the digital information from the content storage medium has an encrypted identifier read step of reading encrypted identifier stored in association with the file of the digital information stored in the content storage medium, and an encrypted identifier determining step of decoding the read encrypted identifier in specific decoding means of an environment of the method, and determining whether the decoded identifier agrees with an identifier of the method.

In a content processing method of the present invention in the aforementioned method, in the encrypted identifier read step, the encrypted identifier is read from an authentication file system on the content storage medium accessible only when authentication succeeds between the detachable content storage medium and the environment providing the specific identifier.

A content processing method of the present invention further has in the above-mentioned method an identifier inverse-conversion step of converting the encrypted identifier corresponding to a specific conversion expression, and in the encrypted identifier determining step, the decoded encrypted identifier subjected to inverse-conversion in the identifier inverse-conversion step is determined whether or not to agree with an identifier of the method.

In an information management system where digitized information of content is managed as a file on a detachable content storage medium and use of the digital information is allowed only in an environment providing a specific identifier, a content processing method of the present invention for reading the digital information from the content storage medium has a unique data read step of reading unique data stored in association with the file of the digital information stored in the content storage medium, and a unique data determining step of determining whether the read unique data agrees with unique data of an environment of the method.

In a content processing method of the present invention in the aforementioned method, in the unique data read step, the unique data is read from an authentication file system on the content storage medium accessible only when authentication succeeds between the detachable content storage medium and the environment providing the specific identifier.

In an information management system where digitized information of content is managed as a file on a detachable content storage medium and use of the digital information is allowed only in a specific environment, a content processing method of the present invention for reading the digital information from the content storage medium has a write time read step of reading write time of the digital information stored in the content storage medium in association with the file of the digital information, and a write time determining step of determining whether or not the read write time agrees with one of write times stored in an environment of the method.

In a content processing method of the present invention in the aforementioned method, in the write time read step, the write time is read from an authentication file system on the content storage medium accessible only when authentication succeeds between the detachable content storage medium and the specific environment.

In a content processing method of the present invention, in the aforementioned method the information management system allows use of the digital information only in an environment providing a specific identifier, and in the write time determining step, the write time read in the write time read step is decoded using information related to the identifier of an environment of the method, and determined whether or not to agree with one of write times stored in the environment of the method.

A content processing method of the present invention further has in the aforementioned method a write time conversion step of converting the write time read in the write time read step using information related to the identifier, and in the write time determining step, the converted write time is decoded using a specific method, and determined whether or not to agree with one of write times stored in the environment of the method.

In an information management system where digitized information of content is managed as a file on a detachable content storage medium and use of the digital information is allowed only in a specific environment, a content processing method of the present invention for reading the digital information from the content storage medium has a user designated value read step of reading a user designated value that is designated by a user and stored in the content storage medium in association with the file of the digital information, and a user designated value determining step of determining whether or not the read user designated value agrees with a user designated value stored in an environment of the method.

In a content processing method of the present invention, in the aforementioned method the information management system allows use of the digital information only in an environment providing a specific identifier, and in the user designated value determining step, the user designated value read in the user designated value read step is decoded using information related to the identifier of the environment of the method, and determined whether or not to agree with a user designated value stored in the environment of the method.

In an information management system where digitized information of content is managed as a file on a detachable content storage medium and use of the digital information is allowed only in a specific environment, a content processing method of the present invention for reading the digital information from the content storage medium has a write identification data read step of reading identification data stored in the content storage medium in association with the file of the digital information, and a write identification data determining step of determining whether or not the read identification data agrees with one of identification data stored in an environment of the method.

In an information management system where digitized information of content is managed as a file on a detachable content storage medium and use of the digital information is allowed only in a specific environment, a content processing method of the present invention for reading the digital information from the content storage medium has a write portion read step of reading a write portion that is a storage location of the file of the digital information and stored in the content storage medium from the content storage medium, and a write portion determining step of determining whether or not the read write portion agrees with one of write portions stored in an environment of the method.

In a content processing method of the present invention, in the above-mentioned method the specific environment or the environment providing the specific identifier is a specific device to which the detachable content storage medium is detachable.

In a content processing method of the present invention, in the above-mentioned method the specific environment or the environment providing the specific identifier is an environment specified by an identifier indicative of a contract with specific service.

According to the above-mentioned methods, before reading and decoding encrypted content stored in the content storage medium, the encrypted content is distinguished based on the information associated with the encrypted content, whereby it is possible to distinguish the information of the content readily without decoding the encrypted content. Further, it is made possible to determine whether content stored in the content storage medium is available or not, and it is thus possible to prevent inconvenience of playing back unauthorized data erroneously.

In an information management system where digitized information of content is managed as a file on a detachable content storage medium and use of the digital information is allowed only in an environment providing a specific identifier, a content processing program of the present invention for writing the digital information in the content storage medium has a data encrypting step of encrypting identification data using information related to the identifier as a key for encryption, and an encrypted data storage step of storing the encrypted identification data in the content storage medium in association with the file of the digital information.

In a content processing program of the present invention, in the encrypted data storage step, the encrypted identification data is stored in the content storage medium in an authentication file system, which functions as a storage destination for the encrypted identification data on the content storage medium and which is accessible only when authentication succeeds between the detachable content storage medium and the environment providing the specific identifier, while the file of the digital information is associated with the identification data stored in the authentication file system.

In an information management system where digitized information of content is managed as a file on a detachable content storage medium and use of the digital information is allowed only in an environment providing a specific identifier, a content processing program of the present invention for writing the digital information in the content storage medium has an identifier storage step of associating the identifier with the file of the digital information to store in the content storage medium.

In a content processing program of the present invention, in the identifier storage step, the identifier in the content storage medium is stored in an authentication file system accessible file system, which functions as a storage destination for the encrypted identification data on the content storage medium and which is accessible only when authentication succeeds between the detachable content storage medium and the environment providing the specific identifier, while the file of the digital information is associated with the identifier stored in the authentication file system.

In an information management system where digitized information of content is managed as a file on a detachable content storage medium and use of the digital information is allowed only in an environment providing a specific identifier, a content processing program of the present invention for writing the digital information in the content storage medium has an identifier encrypting step of encrypting the identifier using specific encrypting means, and an encrypted identifier storage step of storing the encrypted identifier in the content storage medium in association with the file of the digital information.

In a content processing program of the present invention, in the encrypted identifier storage step, the encrypted identifier in the content storage medium is stored in an authentication file system, which functions as a storage destination for the encrypted identification data on the content storage medium and which is accessible only when authentication succeeds between the detachable content storage medium and the environment providing the specific identifier, while the file of the digital information is associated with the encrypted identifier stored in the authentication file system.

A content processing program of the present invention further has an identifier conversion step of converting the identifier corresponding to a specific conversion expression,where in the identifier encrypting step, the identifier converted in the identifier conversion step is encrypted, and in the encrypted identifier storage step, the encrypted identifier is stored in the content storage medium.

In an information management system where digitized information of content is managed as a file on a detachable content storage medium and use of the digital information is allowed only in an environment providing a specific identifier, a content processing program of the present invention for writing the digital information in the content storage medium has a unique data storage step of storing identification data in the content storage medium in association with the file of the digital information, and the identification data is different from the specific identifier and unique to the environment providing the specific identifier.

In a content processing program of the present invention, in the unique data storage step, the identification data in the content storage medium is stored in an authentication file system, which functions as a storage destination for the encrypted identification data on the content storage medium and which is accessible only when authentication succeeds between the detachable content storage medium and the environment providing the specific identifier, while the file of the digital information is associated with the identification data stored in the authentication file system.

In an information management systemwhere digitized information of content is managed as a file on a detachable content storage medium and use of the digital information is allowed only in a specific environment, a content processing program of the present invention for writing the digital information in the content storage medium has a write time specification step of specifying the time the digital information was written in the content storage medium, and a write time storage step of storing the specified time in an environment of the program to write data, and associating the write time with the file of the digital information to store in the content storage medium.

In a content processing program of the present invention, in the write time storage step, the write time in the content storage medium is stored in an authentication file system, which functions as a storage destination for the encrypted identification data on the content storage medium and which is accessible only when authentication succeeds between the detachable content storage medium and the environment providing the specific identifier, while the file of the digital information is associated with the write time stored in the authentication file system.

In a content processing program of the present invention, the information management system allows use of the digital information only in the environment providing a specific identifier, the content processing program further has a write time encrypting step of encrypting the write time using information related to the identifier, and in the write time storage step, at least write time stored in the content storage medium is encrypted in the write time encrypting step.

A content processing program of the present invention further has a write time conversion step of converting the write time using information related to the identifier, and in the write time encrypting step, the converted time is encrypted using a specific method.

In an information management systemwhere digitized information of content is managed as a file on a detachable content storage medium and use of the digital information is allowed only in a specific environment, a content processing program of the present invention for writing the digital information in the content storage medium has a user designated value write step of setting the environment for a user designated value that is a value or a name designated by a user, and a user designated value storage step of storing the user designated value in the content storage medium.

A content processing program of the present invention further has an initial value set step of randomly setting an initial value to be used as the user designated value in a state that the user does not designate the user designated value.

In a content processing program of the present invention, the information management system allows use of the digital information only in the environment providing a specific identifier, the content processing program further has a user designated value encrypting step of encrypting the user designated value using information related to the identifier, and in the user designated value storage step, the user designated value stored in the content storage medium is encrypted in the user designated value encrypting step.

In an information management systemwhere digitized information of content is managed as a file on a detachable content storage medium and use of the digital information is allowed only in a specific environment, a content processing program of the present invention for writing the digital information in the content storage medium has a write identification data generating step of generating identification data in writing the digital information in the content storage medium, and a write identification data storage step of storing the identification data in an environment of the program to write data, and associating the identification data with the file of the digital information to store in the content storage medium.

In a content processing program of the present invention, in the write identification data generating step, the identification data is generated randomly in write or using specific procedures.

In an information management system where digitized information of content is managed as a file on a detachable content storage medium and use of the digital information is allowed only in a specific environment, a content processing program of the present invention for writing the digital information in the content storage medium has a write portion specification step of specifying a write portion in writing the digital information in the content storage medium, and a write portion storage step of storing the specified portion in an environment of the program to write data.

In a content processing program of the present invention, the digital information is encrypted using information related to the identifier.

In a content processing program of the present invention, the identification data is data such as a character sequence having some meaning, numeric value, image and audio.

In a content processing program of the present invention, the identifier is data such as a character sequence having some meaning, numeric value, image and audio.

In a content processing program of the present invention, the specific environment or the environment providing the specific identifier is a specific device to which the detachable content storage medium is detachable.

In a content processing program of the present invention, the specific environment or the environment providing the specific identifier is an environment specified by an identifier indicative of a contract with specific service.

According to above-mentioned constitutions, it is possible to more readily distinguish between a plurality of pieces of encrypted content stored in the content storage medium, based on the information associated with the encrypted content. Further, it is made possible to determine whether content stored in the content storage medium is available or not, and it is thus possible to prevent inconvenience of playing back unauthorized data erroneously.

In an information management system where digitized information of content is managed as a file on a detachable content storage medium and use of the digital information is allowed only in an environment providing a specific identifier, a content processing program of the present invention for reading the digital information from the content storage medium has an encrypted data read step of reading encrypted data stored in association with the file of the digital information in the content storage medium, and an encrypted data determining step of decoding the read encrypted data using information related to the identifier of an environment of the program, and determining whether the decoded data agrees with identification data.

In a content processing program of the present invention, in the encrypted data read step, the encrypted identification data is read from an authentication file system on the content storage medium accessible only when authentication succeeds between the detachable content storage medium and the environment providing the specific identifier.

In an information management system where digitized information of content is managed as a file on a detachable content storage medium and use of the digital information is allowed only in an environment providing a specific identifier, a content processing program of the present invention for reading the digital information from the content storage medium has an identifier determining step of reading the identifier stored in association with the file of the digital information stored in the content storage medium, and determining whether the identifier agrees with an identifier of an environment of the program.

In a content processing program of the present invention, in the identifier determining step, the identifier is read from an authentication file system on the content storage medium accessible only when authentication succeeds between the detachable content storage medium and the environment providing the specific identifier.

In an information management system where digitized information of content is managed as a file on a detachable content storage medium and use of the digital information is allowed only in an environment providing a specific identifier, a content processing program of the present invention for reading the digital information from the content storage medium has an encrypted identifier read step of reading encrypted identifier stored in association with the file of the digital information stored in the content storage medium, and an encrypted identifier determining step of decoding the read encrypted identifier in specific decoding means of an environment of the program, and determining whether the decoded identifier agrees with an identifier in the program.

In a content processing program of the present invention, in the encrypted identifier read step, the encrypted identifier is read from an authentication file system on the content storage medium accessible only when authentication succeeds between the detachable content storage medium and the environment providing the specific identifier.

A content processing program of the present invention further has an identifier inverse-conversion step of converting the encrypted identifier corresponding to a specific conversion expression, and in the encrypted identifier determining step, the decoded encrypted identifier subjected to inverse-conversion in the identifier inverse-conversion step is determined whether or not to agree with an identifier in the program.

In an information management system where digitized information of content is managed as a file on a detachable content storage medium and use of the digital information is allowed only in an environment providing a specific identifier, a content processing program of the present invention for reading the digital information from the content storage medium has a unique data read step of reading unique data stored in association with the file of the digital information in the content storage medium, and a unique data determining step of determining whether the read unique data agrees with unique data of an environment of the program.

In a content processing program, in the unique data read step, the unique data is read from an authentication file system on the content storage medium accessible only when authentication succeeds between the detachable content storage medium and the environment providing the specific identifier.

In an information management system where digitized information of content is managed as a file on a detachable content storage medium and use of the digital information is allowed only in a specific environment, a content processing program of the present invention for reading the digital information from the content storage medium has a write time read step of reading write time of the digital information stored in the content storage medium in association with the file of the digital information, and a write time determining step of determining whether or not the read write time agrees with one of write times stored in an environment of the program.

In a content processing program of the present invention, in the write time read step, the write time is read from an authentication file system on the content storage medium accessible only when authentication succeeds between the detachable content storage medium and the specific environment.

In a content processing program of the present invention, the information management system allows use of the digital information only in an environment providing a specific identifier, and in the write time determining step, the write time read in the write time read step is decoded using information related to the identifier of the environment of the program, and determined whether or not to agree with one of write times stored in the environment of the program.

A content processing program of the present invention further has a write time conversion step of converting the write time read in the write time read step using information related to the identifier, in the write time determining step, the converted write time is decoded using a specific method, and determined whether or not to agree with one of write times stored in the environment of the program.

In an information management system where digitized information of content is managed as a file on a detachable content storage medium and use of the digital information is allowed only in a specific environment, a content processing program of the present invention for reading the digital information from the content storage medium has a user designated value read step of reading a user designated value that is designated by a user and stored in the content storage medium in association with the file of the digital information, and a user designated value determining step of determining whether or not the read user designated value agrees with a user designated value stored in an environment of the program.

In a content processing program of the present invention, the information management system allows use of the digital information only in an environment providing a specific identifier, and in the user designated value determining step, the user designated value read in the user designated value read step is decoded using information related to the identifier of the environment of the program, and determined whether or not to agree with a user designated value stored in the environment of the program.

In an information management system where digitized information of content is managed as a file on a detachable content storage medium and use of the digital information is allowed only in a specific environment, a content processing program of the present invention for writing the digital information in the content storage medium has a write identification data read step of reading identification data stored in the content storage medium in association with the file of the digital information, and a write identification data determining step of determining whether or not the read identification data agrees with one of identification data stored in an environment of the program.

In an information management system where digitized information of content is managed as a file on a detachable content storage medium and use of the digital information is allowed only in an environment providing a specific identifier, a content processing program of the present invention for reading the digital information from the content storage medium has a write portion read step of reading a write portion that is a storage location of the file of the digital information and stored in the content storage medium from the content storage medium, and a write portion determining step of determining whether or not the read write portion agrees with one of write portions stored in an environment of the program.

In a content processing program of the present invention, the specific environment or the environment providing the specific identifier is a specific device to which the detachable content storage medium is detachable.

In a content processing program of the present invention, the specific environment or the environment providing the specific identifier is an environment specified by an identifier indicative of a contract with specific service.

According to above-mentioned constitutions, before reading and decoding encrypted content stored in the content storage medium, the encrypted content is distinguished based on the information associated with the encrypted content, whereby it is possible to distinguish the information of the content readily without decoding the encrypted content. Further, it is made possible to determine whether content stored in the content storage medium is available or not, and it is thus possible to prevent inconvenience of playing back unauthorized data erroneously.

This application is based on the Japanese Patent ApplicationNo.2002-097429 filed on March 29, 2002 entire content of which is expressly incorporated by reference herein.

### Industrial Applicability

The present invention is suitable for a case that a content storage medium is used detachably in a portable apparatus terminal apparatus, for example.

## Claims

1. In an information managementsystem wheredigitized information of content is managed as a file on a detachable content storage medium and use of the digital information is allowed only in an environment providing a specific identifier, a content processing apparatus of the present invention for writing the digital information into the content storage medium, comprising:
a data encrypting section that encrypts identification data using the identifier or information related to the identifier as a key for encryption; and
an encrypted data storage section that stores the encrypted identification data in the content storage medium in association with the file of the digital information.

2. A content processing apparatus that writes digital information in a detachable content storage medium in an information management system for managing content that is the digital information as a file on the content storage medium and allowing use of the digital information only in an environment having a specific identifier, comprising:
an identifier encrypting section that encrypts the identifier or information related to the identifier using specific encrypting means; and
an encrypted identifier storage section that stores the encrypted identifier or the encrypted information related to the identifier in the content storage medium in association with the file of the digital information.

3. A content processing apparatus that writes digital information in a detachable content storage medium in an information management system for managing content that is the digital information as a file on the content storage medium and allowing use of the digital information only in an environment having a specific identifier, comprising:
a unique data storage section that stores identification data in the content storage medium in association with the file of the digital information, the identification data different from the specific identifier and unique to the environment providing the specific identifier.

4. The content processing apparatus according to claim 3, wherein the identification data unique to the environment is a value or a name designated by a user.

5. The content processing apparatus according to claim 4, further comprising:
an initial value set section that randomly sets an initial value to be used as the value or the name in a state that the user does not designate the value or the name.

6. The content processing apparatus according to claim 5, further comprising:
a user designated value encrypting section that encrypts the value or the name using the information related to the identifier,
wherein in the unique data storage section, the value or the name stored in the content storage medium is encrypted by the user designated value encrypting section.

7. The content processing apparatus according to any one of claims 1 to 6, wherein the environment providing the specific identifier is an environment specified by the identifier indicative of a contract with specific service.

8. In an information management system where digitized information of content is managed as a file on a detachable content storage medium and use of the digital information is allowed only in an environment providing a specific identifier, a content processing apparatus of the present invention for reading the digital information from the content storage medium, comprising:
an encrypted data read section that reads encrypted data stored in association with the file of the digital information in the content storage medium; and
an encrypted data determining section which decodes the read encrypted data using the identifier of an environment of the apparatus or information related to the identifier of the environment of the apparatus, and determines whether or not the decoded data agrees with identification data.

9. In an information management system where digitized information of content is managed as a file on a detachable content storage medium and use of the digital information is allowed only in an environment providing a specific identifier, a content processing apparatus of the present invention for reading the digital information from the content storage medium, comprising:
an encrypted identifier read section that reads encrypted identifier obtained by encrypting the identifier or encrypted information obtained by encrypting information related to the identifier, each stored in association with the file of the digital information in the content storage medium; and
an encrypted identifier determining section which decodes the read encrypted identifier or encrypted information in specific decoding means of an environment of the apparatus, and determines whether or not decoded data agrees with the identifier of the apparatus or the information related to the identifier.

10. A content processing apparatus that reads digital information from a detachable content storage medium in an information management system for managing content that is the digital information as a file on the content storage medium and allowing use of the digital information only in an environment having a specific identifier, comprising:
a unique data read section that reads unique data stored in association with the file of the digital information in the content storage medium; and
a unique data determining section which determines whether or not the read unique data agrees with identification data unique to an environment of the apparatus.

11. The content processing apparatus according to claim 10, wherein the identification data unique to the environment is a user designated value designated by a user, and the unique data determining section determines whether or not the unique data read from the content storage medium agrees with the user designated value stored in the environment of the apparatus.

12. The content processing apparatus according to claim 11, wherein the unique data determining section decodes the read unique data using information related to the identifier of the environment of the apparatus, and determines whether or not the decoded unique data agrees with the user designated value stored in the environment of the apparatus.

13. The content processing apparatus according to any one of claims 8 to 12, wherein the environment providing the specific identifier is an environment specified by the identifier indicative of a contract with specific service.

14. In an information management system where digitized information of content is managed as a file on a detachable content storage medium and use of the digital information is allowed only in a specific environment providing a specific identifier, a content storage medium of the present invention has a constitution whereby, wherein identification data encrypted using the identifier or information related to the identifier as an encryption key is stored in association with the file of the digital information in the content storage medium.

15. In an information management systemwhere digitized information of content is managed as a file on a detachable content storage medium and use of the digital information is allowed only in an environment providing a specific identifier, a content storage medium of the present invention has a constitution whereby, wherein encrypted identifier obtained by encrypting the identifier using specific encrypting means or encrypted information obtained by encrypting information related to the identifier using specific encrypting means is stored in association with the file of the digital information in the content storage medium.

16. In an information management system where digitized information of content is managed as a file on a detachable content storage medium and use of the digital information is allowed only in an environment providing a specific identifier, a content storage medium of the present invention has a constitution whereby,, wherein identification data is stored in association with the file of the digital information in the content storage medium, the identification data different from the specific identifier and unique to the environment providing the specific identifier.

17. The content storage medium according to claim 16, wherein the identification data unique to the environment is a value or a name designated by a user.

18. The content storage medium according to claim 17, wherein as the value or the name designated by the user, a random value is stored as an initial value in a state that the user does not designate the value or the name.

19. The content storage medium according to claim 17, wherein the value or the name is encrypted using information related to the identifier.

20. The content storage medium according to any one of claims 14 to 19, wherein the identifier is data indicative of a contract with specific service.

21. In an information management system where digitized information of content is managed as a file on a detachable content storage medium and use of the digital information is allowed only in an environment providing a specific identifier, a content processing method of the present invention for writing the digital information in the content storage medium, comprising:
a data encrypting step of encrypting identification data using the identifier or information related to the identifier as a key for encryption; and
an encrypted data storage step of storing the encrypted identification data in the content storage medium in association with the file of the digital information.

22. In an information management system where digitized information of content is managed as a file on a detachable content storage medium and use of the digital information is allowed only in an environment providing a specific identifier, a content processing method of the present invention for writing the digital information in the content storage medium, comprising:
an identifier encrypting step of encrypting the identifier or information related to the identifier using specific encrypting means; and
an encrypted identifier storage step of storing the encrypted identifier or the encrypted information related to the identifier in the content storage medium in association with the file of the digital information.

23. In an information management system where digitized information of content is managed as a file on a detachable content storage medium and use of the digital information is allowed only in an environment providing a specific identifier, a content processing method of the present invention for writing the digital information in the content storage medium, comprising:
a unique data storage step of storing identification data in the content storage medium in association with the file of the digital information, the identification data different from the specific identifier and unique to the environment providing the specific identifier.

24. The content processing method according to claim 23, wherein the identification data unique to the environment is a value or a name designated by a user.

25. The content processing method according to claim 24, further comprising:
an initial value set step of randomly setting an initial value to be used as the value or the name in a state that the user does not designate the value or the name.

26. The content processing method according to claim 24, further comprising:
a user designated value encrypting step of encrypting the value or the name using information related to the identifier,
wherein in the unique data storage step, the value or the name stored in the content storage medium is encrypted in the user designated value encrypting step.

27. The content processing method according to any one of claims 21 to 26, wherein the environment providing the specific identifier is an environment specified by the identifier indicative of a contract with specific service.

28. In an information management systemwhere digitized information of content is managed as a file on a detachable content storage medium and use of the digital information is allowed only in an environment providing a specific identifier, a content processing method of the present invention for reading the digital information from the content storage medium, comprising:
an encrypted data read step of reading encrypted data stored in association with the file of the digital information in the content storage medium; and
an encrypted data determining step of decoding the read encrypted data using the identifier of the environment of the method or information related to the identifier of the environment of the method, and determining whether or not the decoded data agrees with identification data.

29. A content processing method for reading digital information from a detachable content storage medium in an information management system for managing content that is the digital information as a file on the content storage medium and allowing use of the digital information only in an environment having a specific identifier, comprising:
an encrypted identifier read step of reading encrypted identifier obtained by encrypting the identifier or encrypted information obtained by encrypting information related to the identifier, each stored in association with the file of the digital information in the content storage medium; and
an encrypted identifier determining step of decoding the read encrypted identifier or encrypted information in specific decoding means of an environment of the method, and determining whether or not decoded data agrees with the identifier of the method or the information related to the identifier.

30. In an information management system where digitized information of content is managed as a file on a detachable content storage medium and use of the digital information is allowed only in an environment providing a specific identifier, a content processing method of the present invention for reading the digital information from the content storage medium, comprising:
a unique data read step of reading unique data stored in association with the file of the digital information in the content storage medium; and
a unique data determining step of determining whether or not the read unique data agrees with identification data unique to the environment of the method.

31. The content processing method according to claim 30, wherein the identification data unique to the environment is a user designated value designated by a user, and in the unique data determining step, it is determined whether or not the unique data read from the content storage medium agrees with the user designated value stored in the environment of the method.

32. The content processing method according to claim 31, wherein in the unique data determining step, the read unique data is decoded using information related to the identifier of the environment of a read source, and it is determined whether or not the decoded unique data agrees with the user designated value stored in the environment of the read source.

33. The content processing method according to any one of claims 28 to 32, wherein the environment providing the specific identifier is an environment specified by the identifier indicative of a contract with specific service.

34. In an information management system where digitized information of content is managed as a file on a detachable content storage medium and use of the digital information is allowed only in an environment providing a specific identifier, a content processing program of the present invention for writing the digital information in the content storage medium, comprising:
a data encrypting step of encrypting identification data using the identifier or information related to the identifier as a key for encryption; and
an encrypted data storage step of storing the encrypted identification data in the content storage medium in association with the file of the digital information.

35. A content processing program for writing digital information in a detachable content storage medium used in an information management system for managing content that is the digital information as a file on the content storage medium and allowing use of the digital information only in an environment having a specific identifier, comprising:
an identifier encrypting step of encrypting the identifier or information related to the identifier using specific encrypting means; and
an encrypted identifier storage step of storing the encrypted identifier or the encrypted information related to the identifier in the content storage medium in association with the file of the digital information.

36. In an information management system where digitized information of content is managed as a file on a detachable content storage medium and use of the digital information is allowed only in an environment providing a specific identifier, a content processing program of the present invention for writing the digital information in the content storage medium, comprising:
a unique data storage step of storing identification data in the content storage medium in association with the file of the digital information, the identification data different from the specific identifier and unique to the environment providing the specific identifier.

37. The content processing program according to claim 36, wherein the identification data unique to the environment is a value or a name designated by a user.

38. The content processing program according to claim 37, further comprising:
an initial value set step of randomly setting an initial value to be used as the value or the name in a state that the user does not designate the value or the name.

39. The content processing program according to claim 37, further comprising:
a user designated value encrypting step of encrypting the value or the name using information related to the identifier,
wherein in the unique data storage step, the value or the name stored in the content storage medium is encrypted in the user designated value encrypting step.

40. The content processing program according to any one of claims 34 to 39, wherein the environment providing the specific identifier is an environment specified by the identifier indicative of a contract with specific service.

41. In an information management system where digitized information of content is managed as a file on a detachable content storage medium and use of the digital information is allowed only in an environment providing a specific identifier, a content processing program of the present invention for reading the digital information from the content storage medium, comprising:
an encrypted data read step of reading encrypted data stored in association with the file of the digital information in the content storage medium; and
an encrypted data determining step of decoding the read encrypted data using the identifier of the environment of the program or the information related to the identifier of the environment of the program, and determining whether or not the decoded data agrees with identification data.

42. In an information management system where digitized information of content is managed as a file on a detachable content storage medium and use of the digital information is allowed only in an environment providing a specific identifier, a content processing program of the present invention for reading the digital information from the content storage medium, comprising:
an encrypted identifier read step of reading encrypted identifier obtained by encrypting the identifier or encrypted information obtained by encrypting information related to the identifier, each stored in association with the file of the digital information in the content storage medium; and
an encrypted identifier determining step of decoding the read encrypted identifier or encrypted information in specific decoding means of the environment of the program, and determining whether or not decoded data agrees with the identifier of the program or the information related to the identifier of the apparatus.

43. In an information management system where digitized information of content is managed as a file on a detachable content storage medium and use of the digital information is allowed only in an environment providing a specific identifier, a content processing program of the present invention for reading the digital information from the content storage medium, comprising:
a unique data read step of reading unique data stored in association with the file of the digital information in the content storage medium; and
a unique data determining step of determining whether or not the read unique data agrees with identification data unique to the environment of the program.

44. The content processing program according to claim 43, wherein the identification data unique to the environment is a user designated value designated by a user, and in the unique data determining step, it is determined whether or not the unique data read from the content storage medium agrees with the user designated value stored in the environment of the program.

45. The content processing program according to claim 44, wherein in the unique data determining step, the read unique data is decoded using information related to the identifier of the environment of a read source, and it is determined whether or not the decoded unique data agrees with the user designated value stored in the environment of the read source.

46. The content processing program according to any one of claims 41 to 45, wherein the environment providing the specific identifier is an environment specified by the identifier indicative of a contract with specific service.
